# EUROPÄISCHE PATENTSCHRIFT

(11) **EP 4 153 659 B1**
(45) Veröffentlichungstag und Bekanntmachung des Hinweises auf die Patenterteilung: **30.09.2026**
(21) Anmeldenummer: 21727111.3
(22) Anmeldetag: 17.05.2021
(51) Int. Cl.: C08G 77/442, C08L 83/04, C08L 83/12, C08L 83/10

(54) **HYBRIDELASTOMERMATERIAL**
HYBRID ELASTOMER MATERIAL
MATÉRIAU ÉLASTOMÈRE HYBRIDE

(30) Priorität: 20.05.2020 DE 102020113737
(43) Veröffentlichungstag der Anmeldung: 29.03.2023
(73) Patentinhaber: EKPO Fuel Cell Technologies GmbH, 72581 Dettingen (DE); CHT Germany GmbH, 72072 Tübingen (DE)
(72) Erfinder: HORNIG, Roy, 72574 Bad Urach (DE); WILL, Peter, 72116 Mössingen (DE); SCHUREK, Petr, 72393 Burladingen (DE)
(74) Vertreter: Hoeger, Stellrecht & Partner Patentanwälte mbB
(86) Internationale Anmeldenummer: PCT/EP2021/063022
(87) Internationale Veröffentlichungsnummer: WO 2021/233844

(56) Entgegenhaltungen:
- EP-A1- 3 476 900

## Beschreibung

Die Erfindung betrifft ein Hybridelastomermaterial, insbesondere zur Verwendung als Dichtungswerkstoff in Brennstoffzellen, für Trinkwasserleitungen, sowie als biokompatibler Werkstoff für medizintechnische Anwendungen (u.a. für Implantate).

Elastomere Dichtungswerkstoffe sind vielfältig im Einsatz und sind insbesondere häufig Bedingungen ausgesetzt, die eine hohe chemische Langzeitbeständigkeit in wässrigen Medien mit saurem, neutralem oder alkalischem Charakter unter gleichzeitiger mechanischer Verpressung voraussetzen, zudem bei Temperaturbelastungen von bis ca. 120 °C.

Die Bedingungen, denen Elastomerwerkstoffe in Brennstoffzellen, insbesondere Feststoffpolymer-Brennstoffzellen, ausgesetzt sind, verlangen vor allem eine hohe Extraktionsbeständigkeit, damit Kontaminationen aus dem Dichtungswerkstoff heraus vermieden werden und die Funktion elektrochemischer Prozesse in den Brennstoffzellen nicht negativ beeinflusst wird. Reaktionsnebenprodukte sind deshalb bei der Herstellung der Werkstoffe, insbesondere beim Vernetzungsvorgang möglichst zu minimieren.

Des Weiteren wird bei Elastomerwerkstoffen für Brennstoffzellen eine Barrierefunktion gegenüber einer Gaspermeation vorausgesetzt, die jedoch durch konstruktive Maßnahmen (Verpressungsgrad, Dichtprofilauslegung) signifikant unterstützt werden kann.

Standard-Flüssigsilikone, sog. LSR (= Liquid Silicone Rubber), die mit Hilfe von Übergangsmetallkomplexen additionsvernetzbar sind, können im verpressten Zustand als Dichtungswerkstoff eine begrenzte chemische Beständigkeit in wässrigen Medien besitzen. Sie neigen allerdings zu Rück- und Spaltungsreaktionen (Hydrolyse), die eine Depolymerisation mit einschließen. Das gilt besonders im Fall von verpressten Dichtungswerkstoffen, wo Zug-, Druck- und Scherspannungen zusätzlich auf das Material einwirken.

Des Weiteren ist die Neigung bei den LSR-Materialien zur Gaspermeation sehr hoch, d.h. reine LSR-Materialien besitzen eine schlechtere Barrierefunktion als organische Polyolefinkautschuke. Besonders hervorgehoben seien hier die Butylkautschuke Isobuten-Isopren-Kautschuk (IIR), Chlorbutyl-Kautschuk (CIIR) und Brombutyl-Kautschuk (BIIR).

Die Vorteile der Flüssigsilikone liegt in deren Oxidations- und Heissluftbeständigkeit. Diese Vorteile sind für den Einsatz bei Brennstoffzellen vom Feststoffpolymertyp (Protonenaustauschmembran-Brennstoffzellen (PEM-FC)) jedoch eher zweitrangig, da die vorher genannten Nachteile in den relevanten, wässrigen Medien mit Additivzusätzen im Wesentlichen die Lebensdauer vorgeben. Andererseits ist bei polyolefinischen Elastomerwerkstoffen die Langzeit-Heißluftbeständigkeit aufgrund ihrer Ungesättigtheit eingeschränkt, d.h. auf maximale Temperaturen von ca. 120 °C.

Diese und weitere damit zusammenhängende Aspekte sind in der wissenschaftlichen Publikation von R. Hornig "Alken-Hydrosilylierung bei VBN-EPDM-Elastomeren", GAK Gummi Fasern Kunststoffe Jahrgang 70, 9/2017, Seiten 584 - 597, ausführlich thematisiert.

EP3476900 A1 offenbart eine vernetzbare Harzzusammensetzung für Brennstoffzellen enthaltend ein vinylfunktionelles Polymer, ein Polysiloxan mit Si-H-Gruppen, einen Hydrosilylierungskatalysator, und ein Siloxanoligomer mit ungesättigten Gruppen. Die Polymere werden miteinander vernetzt.

Aufgabe der Erfindung ist es, ein Elastomermaterial vorzuschlagen, welches sich insbesondere als Dichtungswerkstoff zwischen den Brennstoffzellen eines Brennstoffzellen-Stacks und den Stacks als solchen eignet, hierfür eine verbesserte Hydrolysebeständigkeit aufweist und neben einem niedrigen Langzeit-Druckverformungsrest bzw. einem langzeitstabilen Dichtkraftverhalten in wässrigen Medien auch eine ausreichend hohe Reißfestigkeit und Reißdehnung besitzt. Zudem muss eine Extraktionsbeständigkeit gegenüber wässrigen, Brennstoffzellen-relevanten Medien hoch und eine ausreichende Barrierefunktion gegenüber einer Gaspermeation gegeben sein.

Die vorstehend genannte Aufgabe wird erfindungsgemäß durch ein Hybridelastomermaterial mit den Merkmalen des Anspruchs 1 gelöst.

Die Hybridelastomere der erfindungsgemäßen Hybridelastomermaterialien weisen ein anorganisches Siloxan-Grundgerüst auf, welches mit elastomeren Polyolefin-Einheiten mittels einer Additionsvernetzung modifiziert wurde. Die Polyolefin-Einheiten fungieren als Schutzgruppen für das Siloxanpolymermaterial gegen chemische Angriffe.

Mit den erfindungsgemäß vorgesehenen elastomeren Polyolefin-Anteilen in dem Hybridelastomer wird erreicht, dass das Siloxan-Grundgerüst des Siloxan-Polymermaterials insbesondere besser gegen Hydrolyseangriffe geschützt ist, somit Spaltungs- und Rückreaktionen reduziert werden, und folglich die Neigung zur Depolymerisation verringert wird, die sonst im dicht-verpressten Zustand im Kontakt mit wässrigen Medien, vor allem bei Temperaturen von ca. 100 °C oder höher unter neutralen, insbesondere aber auch unter alkalischen und sauren Bedingungen, bei ungeschützten Siloxanpolymeren bzw. reinen Flüssigsilikonen (LSR) beobachtet werden.

Die erfindungsgemäßen Hybridelastomermaterialien stellen insbesondere im Vergleich zum additionsvernetzenden, Standard-Flüssigsilikon (LSR) einen optimierten Werkstoff dar, vor allem in Bezug auf die Eigenschaften der Hydrolyse- und allgemein der Chemikalienbeständigkeit bei Temperaturen von ca. 90 °C oder höher in wässrig-sauren Systemen und vor allem im verpressten Zustand in der Verwendung als elastomerer Dichtungswerkstoff.

Die erfindungsgemäßen Hybridelastomermaterialien weisen insbesondere in Kombination die zuletzt genannte chemische Beständigkeit und das erforderliche statische Langzeit-Dichtkraftverhalten in einer für PEM-FCs üblichen thermischen Umgebung bei ca. 90 °C in wässrigen Medien (max. ca. 120 °C) auf.

Die erfindungsgemäßen Hybridelastomermaterialien sind aufgrund ihrer genannten vorteilhaften Eigenschaften unter anderem auch als Dichtungswerkstoff für Trinkwasserleitungen sowie als biokompatibler Werkstoff für medizinische Anwendungen, insbesondere auch Implantate geeignet.

Dabei ist das Hybridelastomer des erfindungsgemäßen Hybridelastomermaterials mit einer ähnlich ultraschnellen Reaktionskinetik bei identischen Verarbeitungstemperaturen erhältlich, wie sie bisher nur von den reinen LSR-Materialien her bekannt ist.

Die Hybridelastomere der erfindungsgemäßen Hybridelastomermaterialien umfassen bevorzugt ein Siloxan-Polymermaterial mit einem oder mehreren (Poly)Si-loxanen mit Seiten- und/oder Endgruppen, welche ausgewählt sind aus H, C₁-C₃₀-Alkyl-Gruppen, C₂-C₃₀-Akenyl-Gruppen und Aryl-Gruppen. Während ein erstes Polysiloxan mit terminalen Vinylgruppen als Basis-Polymer fungiert, werden die gegebenenfalls weiteren (Poly)Siloxane unter den Gesichtspunkten der Kettenverlängerung und der Vernetzung des Hybridelastomeren ausgewählt. Weiterhin basieren erfindungsgemäß verwendete Hybridelastomere bevorzugt auf Polyolefin-Elastomeren, welche seitenständige und/oder terminale Vinylgruppen aufweisen.

Bei bevorzugten Hybridelastomeren umfasst das Siloxanpolymermaterial ein modifiziertes Poly(dimethylsiloxan) oder mehrere modifizierte Poyl(dimethylsiloxa-ne) und/oder modifizierte Siloxane. Die Modifikation umfasst dabei zumindest Vinylgruppen und SiH-Gruppen, die in demselben oder auch in verschiedenen (Poly)(dimethylsiloxanen) in der Gesamtrezeptur vorhanden sein können.

Das Siloxanpolymermaterial umfasst ein oder mehrere Siloxan-polymere der Formel (I) 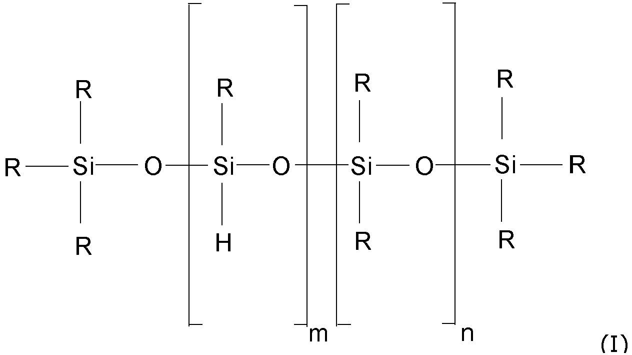
worin die Reste R unabhängig voneinander H, CH₃, Vinyl, Phenyl, (CH₂)ₓCH₃ und/ oder C₃H₆O(C₂H₄O)_{y}(C₃H₅O)_{z}R' bedeuten; wobei
m = 1 bis ca. 100,
n = 0 bis ca. 1000,
x = 1 bis ca. 30,
y = 0 bis ca. 20,
z = 0 bis ca. 30,
und wobei die Summe m + n ≥ 3 ist und R' H, CH₃ oder (CH₂)ₓCH₃ bedeuten.

Dabei bestimmen bevorzugt kettenverlängernde Dimethylsiloxan-Einheiten die Anordnung bzw. die Sequenz der reaktiven Gruppen entlang des Grundgerüsts des Siloxanpolymermaterials.

Das Siloxanpolymer der Formel (I) wird in Kombination mit dem (Poly)Siloxan der Formel (II) in dem erfindungsgemäßen Siloxan-Polymermaterial eingesetzt: 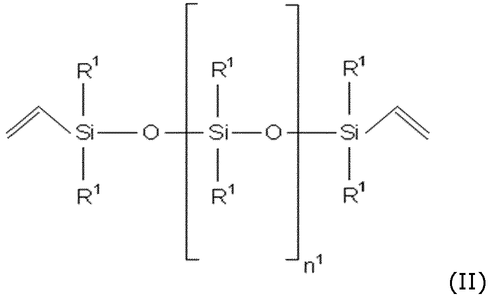 worin die Reste R¹ jeweils unabhängig voneinander CH₃, Vinyl und Phenyl bedeuten und n¹ einen Wert im Bereich von 0 bis ca. 3000, insbesondere von ca. 10 bis ca. 1000 aufweist.

Typischerweise liegen in den erfindungsgemäßen Hybridelastomermaterialien das additionsvernetzbare Siloxan-Polymermaterial und das Polyolefin-Elastomermaterial katalytisch additionsvernetzt vor.

Bevorzugt ist das Siloxan-Polymermaterial und das Polyolefin-Elastomermaterial des Hybridelastomermaterials unter Verwendung eines Siloxan-Vernetzers additionsvernetzt.

Bevorzugte Siloxan-Vernetzer werden ausgewählt aus Vernetzern der Formel (III): 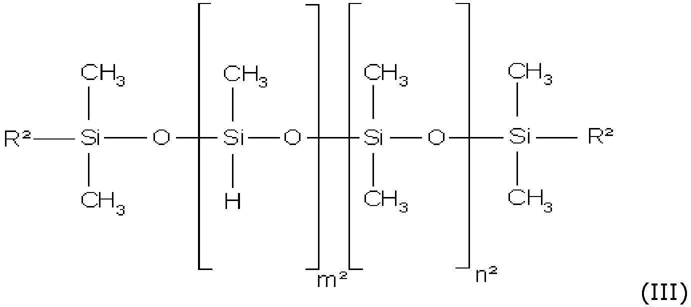 wobei die Reste R² unabhängig voneinander H und CH₃ bedeuten, wobei der Wert für m² im Bereich von 1 bis ca. 100 und der Wert für n² im Bereich von 0 bis ca. 500 liegt. Bevorzugt beträgt der Wert für n² 10 oder mehr und unabhängig davon der Wert für m² 5 oder mehr.

Weiter bevorzugt sind Hybridelastomere, bei denen die Siloxane der Formeln (I), (II) und (III) in der Summe ein Verhältnis der Anteile der SiH-Gruppen zu den Vinylgruppen im Bereich von ca. 1 : 0,5 bis ca. 1 : 4 aufweisen, insbesondere im Bereich von ca. 1 : 1,5 bis ca. 1 : 2,5. Dieses Verhältnis hat Einfluss auf die Reaktionskinetik der Additionsvernetzung.

Das Polyolefin-Elastomermaterial ist aus 1,2-Polybutadien und 1,4-Polybutadien ausgewählt.

Die Hybridelastomere können einen Anteil eines Polyolefin-Elastomers mit funktionellen Gruppen als Abschirmgruppen aufweisen, welche insbesondere ausgewählt sind aus linearen und verzweigten C₂-C₈-Alkyl- und -Alkenylgruppen. Diese Polyolefin-Elastomermaterialien weisen bevorzugt Monomeranteile mit Abschirmgruppen auf, welche bevorzugt im Bereich von 15 Mol-% bis ca. 92 Mol-% liegen. Beispiele hierfür sind 1,2-Polybutadiene mit einem Monomeranteil mit Abschirmgruppen von 15 Mol-%, erhältlich als Nisso B-3008, und mit einem Monomeranteil mit Abschirmgruppen von 92 Mol-%, erhältlich als Nisso B-3000 (jeweils von Nippon Soda Co., Ltd., Japan). Entsprechende, hydrierte Polybutadiene sind ebenfalls geeignete Polyolefin-Elastomermaterialien, welche beispielsweise unter den Produktbezeichnungen Nisso BI-3000 und Nisso BI-3015 von Nippon Soda C., Ltd., Japan erhältlich sind.

Alternativ können als Polyolefin-Elastomermaterialien auch Polybutadiene mit Hydroxyl-Endgruppen verwendet werden, wie sie z.B. unter den Produktbezeichnungen Poly bd R-20LM (Molgewicht ca. 1200 g/Mol) und Poly bd R-45HTLO (Molgewicht ca. 2800 g/Mol) unter der Marke CRAY VALLEY von Total Petrochemicals & Refining USA Inc. angeboten werden.

Des Weiteren sind Polybutadiene, insbesondere in flüssiger Form, bei denen ein 1,4-Polybutadienanteil dominiert, sowie Blockcopolymere basierend auf 1,2-Polybutadien und 1,4-Polybutadien bevorzugte Polyolefin-Elastomere. 1,4-Polybutadiene dieses Typs sind z.B. unter den Produktbezeichnungen LBR-302, LBR-307 und LBR-305 von der Firma Kuraray Co. Ltd, Japan, erhältlich. Blockcopolymere basierend auf 1,2-Polybutadien und 1,4-Polybutadien sind unter den Produktbezeichnungen LBR-352 und LBR-361 von der Firma Kuraray Co., Ltd., Japan, erhältlich.

Das Siloxan-Polymermaterial weist vorzugsweise einen Anteil an der Gesamtmasse des Polymeranteils des erfindungsgemäßen Hybridelastomermaterials von ca. 70 Gew.-% bis zu ca. 99 Gew.-% auf. Der entsprechende Anteil des Polyolefin-Elastomermaterials, insbesondere 1,2-Polybutadien, an dem Polymeranteil des erfindungsgemäßen Hybridelastomermaterials beträgt bevorzugt ca. 28 Gew.-% bis ca. 1 Gew.-%, weiter bevorzugt ca. 10 Gew.-% bis ca. 1 Gew.-%.

Weiter bevorzugt enthält das erfindungsgemäße Hybridelastomermaterial Additive, insbesondere hydrophobierende und/oder hydrophile Füllstoffe, ausgewählt aus Kieselsäure, Silikonharz und Titanaten auf. Diese Füllstoffe fungieren als Säurefänger und dienen der Erhöhung der mechanischen Festigkeitswerte. Vorzugsweise beträgt der Anteil der Additive an der Gesamtmasse der erfindungsgemäßen Hybridelastomermaterialien ca. 5 bis ca. 50 Gew.-%, weiter bevorzugt ca. 15 bis ca. 30 Gew.-%. Füllstoffe zum Aufschäumen werden bevorzugt mit Anteilen von ca. 0,5 Gew.-% bis ca. 4 Gew.-% an der Gesamtrezeptur verwendet, weiter bevorzugt mit Anteilen von ca. 0,2 Gew.-% bis ca. 2 Gew.-%.

Ein besonders bevorzugtes Additiv ist eine hydrophobierte und/oder hydrophile Kieselsäure, welche aufgrund ihrer hohen spezifischen Oberfläche einen verstärkenden Füllstoff darstellt. Als Füllstoffe sind in diesem Sinn besonders geeignet Kieselsäuren, welche in der folgenden Tabelle 1A gelistet sind. Der in der Tabelle 1A angegebene BET-Wert repräsentiert die spezifische Oberfläche, der Kohlenstoffgehalt ist ein Indiz für den Grad der Hydrophobierung der an sich hydrophilen Kieselsäurepartikel. Die AEROSIL-Produkte sind von Evonik Industries AG erhältlich.

**Tabelle 1A**

| Kieselsäure | BET-Oberfläche [m²/g] | Kohlenstoffgehalt [%] nach ISO3262-20 |
|---|---|---|
| AEROSIL R 972 | 90 - 130 | 0,7 - 1,0 |
| AEROSIL R 974 | 150 - 190 | 0,8 - 1,4 |
| AEROSIL R 202 | 80 - 120 | 3,5 - 5,0 |
| AEROSIL R 208 | 80 - 140 | 4,5 - 6,5 |
| AEROSIL R 805 | 125 - 175 | 4,5 - 6,5 |
| AEROSIL R 812 | 230 - 290 | 2,0 - 3,0 |
| AEROSIL R 812 S | 195 - 245 | 3,0 - 4,0 |
| AEROSIL R 104 | 125 - 175 | 1,0 - 2,0 |
| AEROSIL R 816 | 170 - 210 | 0,9 - 1,8 |
| AEROSIL R 711 | 125 - 175 | 4,5 - 6,5 |
| AEROSIL R 7200 | 125 - 175 | 4,5 - 6,5 |
| AEROSIL R 8200 | 135 - 185 | 20, - 4,0 |
| AEROSIL R 9200 | 150 - 190 | 0,7 - 1,3 |
| AEROSIL R 504 | 125 - 175 | 2,0 - 4,5 |
| AEROSIL R 972 Pharma | 90 - 130 | - |
| AEROSIL R 976 S | 215 - 260 | 1,8 - 2,1 |
| AEROSIL RY 50 | 15 - 45 | 3,0 - 4,5 |
| AEROSIL NY 50 | 20 - 40 | 2,5 - 4,0 |
| AEROSIL RY 200 | 80 - 120 | 4,0 - 6,5 |
| AEROSIL RY 200 S | 65 - 95 | 3,0 - 5,0 |
| AEROSIL RY 200 L | 80 - 120 | 4,0 - 6,0 |
| AEROSIL RY 300 | 110 - 140 | 6,0 - 8,5 |
| AEROSIL RX 50 | 25 - 45 | 0,5 - 1,0 |
| AEROSIL NAX 50 | 30 - 50 | 0,5 - 1,0 |
| AEROSIL RX 200 | 115 - 165 | 1,5 - 3,5 |
| AEROSIL RX 300 | 180 - 220 | 2,5 - 5,0 |
| AEROSIL NX 90 G | 50 - 80 | 0,7 - 1,5 |
| AEROSIL REA 200 | 110 - 150 | 5,0 - 7,5 |
| AEROSIL REA 90 | 40 - 70 | 3,0 - 6,0 |
| AEROSIL NA 50 Y | 25 - 45 | 2,0 - 4,0 |
| AEROSIL NA 200 Y | 100 - 150 | 3,0 - 6,5 |
| AEROSIL NA 50 H | 30 - 50 | < 2,0 |
| AEROSIL RA 200 HS | 120 - 160 | < 3,5 |
| AEROSIL 300 V | 270 - 330 | - |

Generell eignen sich Feststoffpartikel als Additive zur Verbesserung der Gaspermeationsbeständigkeit eines als Dichtstoff eingesetzten erfindungsgemäßen Hybridelastomermaterials.

Als Additive kommen in speziellen Anwendungen, insbesondere bei Beschichtungen mit einer Poren- oder Schaumstruktur, wie weiter unten noch im Detail erläutert, auch Füllstoffe aus expandierbaren bzw. expandierten Glass- oder Keramikmaterialien zum Einsatz. Ferner eignen sich als Füllstoffe auch Polymerpartikel auf der Basis von Polyurethan, Polyethylen, Polypropylen, Polyacrylat und Polycarbonat. Die Porengrößen in diesen Füllstoffen können beispielsweise ca. 1 µm bis ca. 200 µm, insbesondere ca. 1 µm bis ca. 50 µm betragen. Die Poren-/ Schaumstruktur einer Beschichtung lässt sich auch durch beim Aushärten des Polymers der Beschichtung expandierbare Polymerpartikel erzeugen.

Als Silikonharz-Additive können z.B. Silanoltrimethylsilyl-modifizierte Silikonharze (SiVance MQOH-7 MQ Silanol Resin des Unternehmens Milliken Chemical) eingesetzt werden, vorzugsweise mit einer Polymerviskosität von ca. 6000 mPas und einer Konzentration von beispielsweise ca. 20 Gew.-%. Spezielle, mit Vinyl- und/ oder SiH-Gruppen modifizierte Harze können durch die Vernetzungsreaktion chemisch mit in das erfindungsgemäß verwendete Hybridelastomer eingebunden werden, was dessen chemische Beständigkeit in wässrigen Medien weiter erhöht. Neben Silikonharzen können auch sogenannte Si-Polymerweichmacher, wie z.B. Polydimethylsiloxane (PDMS) und hochmolekulare Hydroxy-funktionelle Polysiloxane, zum Erhöhen des Schutzes gegen chemische Angriffe (Spaltungsreaktionen) in wässrigen Medien dienen.

Die Anteile der Siloxane der Formeln (I) und (II) an der Gesamtmasse des erfindungsgemäß verwendeten Hybridelastomeren betragen insgesamt ca. 50 Gew.-% bis ca. 90 Gew.-%, bevorzugt ca. 60 bis ca. 70 Gew.-%.

Weiter bevorzugt wird das Siloxan-Polymer der Formel (I) in Form einer Mischung von zwei Siloxan-Polymeren mit einer unterschiedlichen dynamischen Viskosität eingesetzt, beispielsweise von ca. 10.000 mPas (n ≈ 850) und 1.000 mPas (n ≈ 350), wobei das Gewichtsverhältnis dieser Polymere bevorzugt ca. 1 : 2 beträgt.

Des Weiteren wird in einem bevorzugten Siloxan-Polymermaterial ein Siloxan-Polymer der Formel (I) eingesetzt, welches endständige SiH-Gruppen aufweist und so die Funktion eines Kettenverlängerers übernimmt. Der Anteil dieses Siloxan-Polymers am Siloxan-Polymermaterial beträgt vorzugsweise ca. 1 bis ca. 3 Gew.-%.

Das mittlere Molgewicht der Siloxan-Polymere gemäß den Formeln (I) und (II) liegt vorzugsweise im Bereich von ca. 30.000 bis ca. 300.000 g/mol, besonders bevorzugt im Bereich von ca. 60.000 bis ca. 120.000 g/mol. Der Vinylgehalt kann allgemein ca. 0,02 bis ca. 2,0 mmol/g Polymer betragen, vorzugsweise ca. 0,03 bis ca. 0,06 mmol/g Polymer.

Die erfindungsgemäß bevorzugten chemischen Vernetzungsmittel und Kettenverlängerer sind Siloxane und/oder Polysiloxane, welche entlang der Hauptkette und/oder endständig reaktive SiH-Einheiten aufweisen.

Das breite Spektrum der bevorzugten Vernetzungsmittel bzw. Kettenverlängerer weist einen schematischen Molekülaufbau entsprechend den Formeln (II) und (III) auf.

Für das Vernetzungsmittel (Crosslinker) wird ein SiH-Gruppengehalt von ca. 0,5 bis ca. 10 mmol/g und für den Kettenverlängerer ein SiH-Gruppengehalt von ca. 0,5 bis ca. 3 mmol/g bevorzugt.

Beispielhafte Vernetzungsmittel (auch kurz Vernetzer genannt) der Formel (III) sind in der folgenden Tabelle 1B gelistet.

**Tabelle 1B**

| Vernetzer der Formel (III) | SiH-Gruppen Anteil [mmol/g] | Anzahl der SiH-Gruppen, endständig | Anzahl m² seitenständiger SiH-Gruppen | Anzahl n² DimethylsiloxanGruppen | Molekular gewicht [g/mol] | Viskosität [mPas] | Dichte [g/cm³] | Produktname |
|---|---|---|---|---|---|---|---|---|
| H-Siloxan 11/16 | 7,3 | ohne | 16 | 11 | 6200 | 80 | 0,97 | Hansa SFA 11730 |
| H-Siloxan 4/1/2 | 5,3 | 2 | 1 | 4 | 660 | 5 | 0,95 | |
| H-Siloxan 10/6 | 4,6 | ohne | 6 | 10 | 1100 | 30 | 0,97 | |
| H-Siloxan 23/13/2 | 4,3 | 2 | 13 | 23 | 2800 | 40 | 0,94 | Hansa SFA 11430 |
| H-Siloxan 20/5 | 2,4 | ohne | 5 | 20 | 1900 | 40 | 0,96 | |
| H-Siloxan 120/27 | 2,3 | ohne | 27 | 120 | 10000 | 210 | 0,97 | Hansa SFA 11230 |
| H-Siloxan 25/2/2 | 1,7 | 2 | 2 | 25 | 2100 | 40 | 0,97 | Hansa SFA 13202 |
| H-Siloxan 250/10 | 0,5 | ohne | 10 | 250 | 25900 | 1000 | 0,97 | Hansa SFA 11340 |

Bevorzugt werden für die Herstellung der erfindungsgemäß verwendeten Hybridelastomere silicophile Katalysatorkomplexe basierend auf Platin verwendet, z.B. Katalysatorsysteme nach Ossko, Osborn-Fisher, Ashby, Markó, besonders bevorzugt aber Karstedt-Katalysatoren.

Weitere Übergangsmetallkomplexe können auch auf anderen Zentralatomen der Platingruppe basieren, d.h. Rh, Ru, Ir, Os, Pd. Ruthenium-Komplexe nach dem Patent EP 2 004 663 B1 (Wacker AG), sowie Ruthenium-Sulfoxid-Komplexe nach dem Patent EP 2 285 814 B1 (Wacker AG) seien hier aufgeführt. Die Liganden sollten einen silicophilen Charakter aufweisen. Ferner seien Übergangsmetallkomplexe der Lanthanoidgruppe genannt, die nicht dem Chalk-Harrod-Mechanismus gehorchen. Die Konzentration der Katalysatoren kann in einem weiten Bereich von ca. 5 bis ca. 1000 ppm liegen, vorzugsweise von ca. 40 bis ca. 80 ppm.

Der Einbau organischer Schutzgruppen dient, wie schon erwähnt, der Optimierung der chemischen Beständigkeit der Hybridelastomeren gegenüber Spaltungs- und Rückreaktionen in wässrigen Medien. Die organischen Schutz- bzw. Abschirmgruppen werden über eine Hydrosilylierungsreaktion mit dem Polysiloxangrundgerüst chemisch verbunden, d.h. additionsvernetzt. Diese Aufpfropfung, von z.B. 1,2-Polybutadien, erfolgt durch die Reaktion von seitenständigen und/ oder terminalen Vinylgruppen des Polyolefin-Elastomers mit den SiH-Gruppen am Polysiloxangerüst.

Dieser Prozess verbraucht SiH-Gruppen, die für den eigentlichen chemischen Vernetzungsvorgang bei der Aushärtung der Hybridelastomermaterialien nicht mehr zur Verfügung stehen. Die Aufpfropfungsreaktion findet zudem parallel mit dem eigentlichen Vernetzungsvorgang statt.

Erfindungsgemäß verwendete Hybridelastomere werden mit zunehmendem Aufpfropfungsgrad, z.B. mit 1,2-Polybutadien, deshalb immer reaktionsträger. Hier empfiehlt es sich gegenüber den Standard-LSR-Typen deutlich höhere Konzentrationen des Vernetzungsmittels und des Platinkatalysators einzusetzen. Vorzugsweise sei ein Anteil des Platinkatalysators genannt, der einem Platingehalt von ca. 40 bis ca. 100 ppm entspricht.

Beim Standard-LSR wird 1-Ethinyl-1-cyclohexanol (ECH) beispielsweise mit einem Anteil im Bereich von 0 bis ca. 600 ppm bezogen auf die Gesamtmasse eingesetzt. Bei den erfindungsgemäß verwendeten Hybridelastomeren ist oft ein ECH-Gehalt von 0 ppm bevorzugt, da die Reaktionskinetik durch die Aufpfropfungsreaktion bereits verringert ist. Ob Verzögerer wie ECH notwendig werden, orientiert sich aber auch an der Verarbeitung, z.B. der Auslegung des Fließweges, dem Inkubationszeitraum bei der elastomeren Spritzgießverarbeitung mit Hilfe der Kaltkanaltechnologie und Ähnlichem. Bei Bedarf lassen sich die Reaktionskinetik als auch die technischen Eigenschaften der Hybridelastomeren durch die Variation der Konzentration eines Reaktionsverzögerers signifikant beeinflussen.

Neben den acetylenischen Alkoholen (ECH, 3-Methyl-1-dodecin-3-ol (TMDO) usw.) können auch Alkylmaleate (Dimethylmaleat (DMM), Dibutylmaleat (DBM) usw.), silylierte acetylenische Alkohole, niedermolekulare Silikonöle (Divinyltetramethyldisiloxan (DVDS), 1,3,5,7-Tetravinyltetramethyltetracyclosiloxan (ViD4) usw.), sowie Alkylfumarate (Diallylfumarat (DAF), Dimethylfumarat (DMF) usw.) und organische Hydroperoxide als Reaktionsverzögerer eingesetzt werden. Ferner eignen sich hierfür organische Sulfoxide, Amine, Diamine, Amide (z.B. 5,5-Dimethylhydantoin (DMH)), Phosphane, Phosphite, Nitrile, Triazole, Oxime, Diaziridine, Trialkylcyanurate und Trimethylolpropantrimethacrylat (TMPTMA).

Als polyolefinische Schutzgruppe kommt im erfindungsgemäß verwendeten Hybridelastomeren bevorzugt 1,2-Polybutadien zum Einsatz, u.a. die Typen Nd-BR, Co-BR, Ni-BR, Ti-BR (BR = Butadienkautschuk). Bevorzugt wird zudem syndiotaktisches 1,2-Polybutadien eingesetzt, da es eine bessere Tieftemperaturflexibilität aufweist verglichen mit den isotaktischen oder ataktischen Isomerieformen.

Bevorzugt sind insbesondere Polybutadiene der Formel (IV) 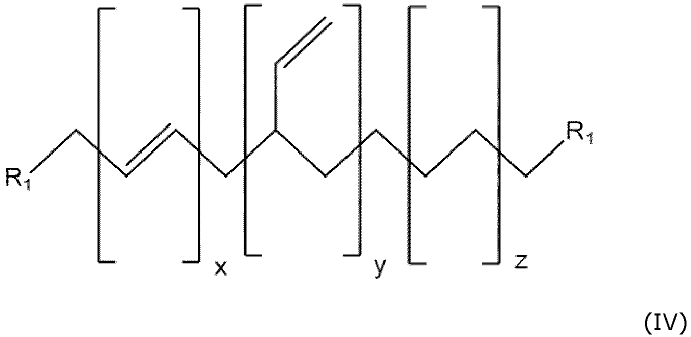 wobei die Parameter x, y und z je nach Polymervariante jeweils unabhängig voneinander einen Wert im Bereich von 0 bis ca. 200 aufweisen können und wobei die Summe von x + y + z ca. 10 bis ca. 500, bevorzugt ca. 10 bis ca. 60 beträgt. Polybutadiene dieses Typs, bei denen ein 1,2-Polybutadien-Anteil dominiert (im Folgenden auch einfach 1,2-Polybutadien genannt) und die Summe von x + y + z ca. 60 beträgt sind beispielsweise als Nisso B-3000 und Nisso B-3008 von Nippon Soda Co., Ltd, Japan erhältlich. Bei hydrierten Polybutadienen (z.B. die Produkte Nisso BI-3000 und Nisso BI-3015) ist der Wert für den Parameter x im Wesentlichen null. Die Gruppen R₁ und R₂ repräsentieren beispielsweise die Gruppen H bzw. OH.

Wie schon erwähnt sind des Weiteren Polybutadiene, insbesondere in flüssiger Form, bevorzugte Polyolefin-Elastomere, bei denen ein 1,4-Polybutadienanteil dominiert und auch Blockcopolymere basierend auf 1,2-Polybutadien und 1,4-Polybutadien.

Eine weitere Variante bevorzugter Polyolefin-Elastomere weist eine Struktur gemäß Formel (IVa) auf: 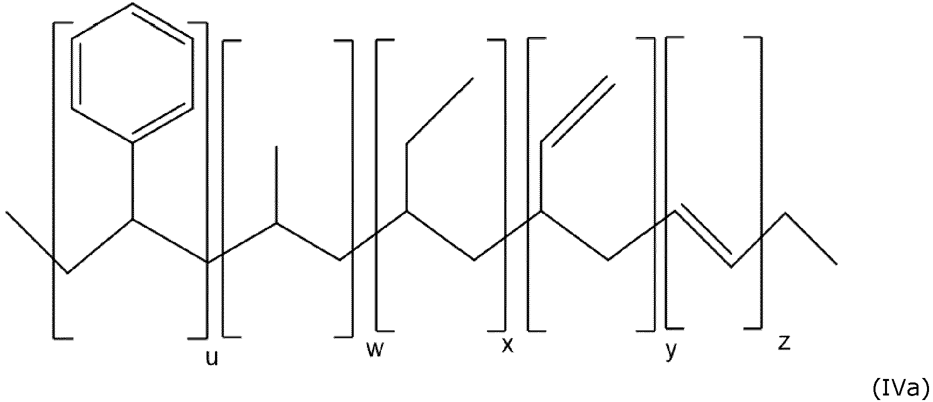 wobei hier die Parameter u, w, x, y und z jeweils unabhängig voneinander Werte im Bereich von 0 bis ca. 200 aufweisen und die Summe u+w+x+y+z dieser Werte bevorzugt ca. 30 bis ca. 1000 beträgt.

Styrol-Butadien-Coploymere der Formel (IVa) sind z.B. unter der Handelsbezeichnung L-SBR-820 und L-SBR-841 von der Firma Kuraray Co. Ltd, Japan, erhältlich.

Zudem finden Alkylgruppen-modifizierte Polysiloxane zur Bereitstellung olefinischer Schutzgruppen Einsatz, wie in Formel (V) dargestellt. 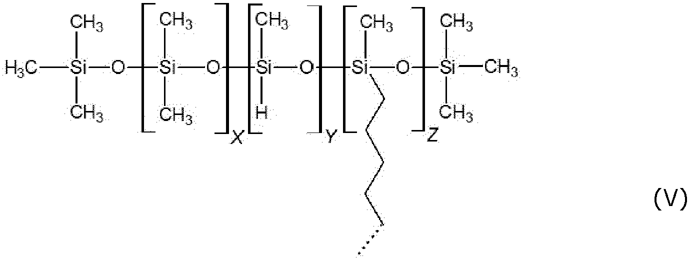 wobei hier der Parameter x einen Wert im Bereich von 0 bis ca. 500 und die Parameter y und z jeweils unabhängig voneinander einen Wert im Bereich von 1 bis ca. 100 aufweisen und wobei die Summe von x + y + z einen Wert von 2 bis ca. 700 aufweist.

1,2-Polybutadiene der Formel (IV) und Polysiloxane der Formel (V) können auch in Form einer Mischung eingesetzt werden, wobei der Gewichtsanteil des Polysiloxans der Formel (V) das bis zu 100-fache des Gewichtsanteils des 1,2-Polybutadiens betragen kann. Ein bevorzugtes Mischungsverhältnis der Gewichtsanteile von 1,2-Polybutadien der Formel (IV) und Polysiloxan der Formel (V) liegt im Bereich von 1 : 1 bis 1 : 5.

Darüber hinaus können als polyolefinische Schutzgruppen - auch in Kombination miteinander - Flüssig-Acrylnitril-Butadienkautschuk (Flüssig-NBR) mit hohem Isomerie-Anteil an 1,2-Vinylbutadien, epoxidierte Flüssig-Polybutadiene mit Anteilen von mehr als 70 Gew.-% 1,2-Vinylbutadien (Nippon Soda Co., Ltd.), (Poly)Norbornene mit terminalen Vinylgruppen, wie z.B. 5-Vinyliden-2-norbornen (VNB), 5-Methyl-5-vinyliden-2-norbornen (MeVNB), 5-Isopyroliden-2-norbornen (IPNB), 5-Methallyl-2-norbornen (MANB), 5-Methyliden-2-norbornen (MNB) und Norbornadien (NBD), zum Einsatz kommen.

Ferner ist ein niedermolekularer Styrol-Butadienkautschuk (SBR) mit einem Isomerie-Anteil an 1,2-Vinylbutadien, sowie teil- bzw. ungesättigter HNBR (hydrierter NBR) bzw. NBR mit einem Restanteil an 1,2-Vinylbutadien, zur Bereitstellung von Schutzgruppen geeignet.

Bevorzugte 1,2-Polybutadiene (wie z.B. NISSO B-3000 und NISSO B-3008 von Nippon Soda Co., Ltd.) weisen ein mittleres Molgewicht von ca. 1.000 bis ca. 5.000 g/mol auf. Besonders bevorzugt sind 1,2-Polybutadiene mit einem Molgewicht von ca. 3.000 g/mol. Der Vinylgruppengehalt (Monomeranteil) der bevorzugten 1,2-Polybutadiene liegt im Bereich von ca. 15 bis ca. 92 Mol-%.

Entsprechende, hydrierte Polybutadiene sind ebenfalls geeignete Polyolefin-Elastomermaterialien, welche beispielsweise unter den Produktbezeichnungen Nisso BI-3000 und Nisso BI-3015 von Nippon Soda C., Ltd., Japan erhältlich sind.

Alternativ können als Polyolefin-Elastomermaterialien auch Polybutadiene mit Hydroxyl-Endgruppen verwendet werden, wie dies weiter oben schon im Detail beschrieben wurde.

Der Anteil des 1,2-Polybutadien, insbesondere mit einer Molmasse von ca. 3000 g/mol, zur Bereitstellung von Abschirmgruppen kann ca. 1 Gew.-% bis ca. 60 Gew.-%, insbesondere bis ca. 40 Gew.-%, weiter bevorzugt bis ca. 30 Gew.-% betragen, vorzugsweise auch ca. 2 bis ca. 10 Gew.-%, jeweils bezogen auf den Gesamtpolymergehalt des Hybridelastomermaterials.

Zu geringe oder zu hohe Konzentrationen von Abschirmgruppen in den erfindungsgemäß verwendeten Hybridelastomeren sind erwartungsgemäß qualitativ nicht förderlich. Aufgepfropfte Abschirmgruppen sollen primär Spaltungs- und Rückreaktionen wie schon beschrieben in wässrigen Medien behindern.

Ein zu hoher Pfropfungsgrad an 1,2-Polybutadieneinheiten kann beispielsweise zu einem Abfall der Reißfestigkeit des erfindungsgemäß verwendeten Hybridelastomeren verglichen mit einem reinen, additionsvernetzten Standard-LSR-Materialien führen (entspricht dem Grundgerüst des erfindungsgemäßen Hybridelastomeren). Des Weiteren kann sich das Langzeit-Dichtkraftverhalten nach aerober und anaerober Heißluftalterung verschlechtern.

Die Erfindung betrifft des Weiteren ein Verfahren zur Herstellung eines erfindungsgemäßen Hybridelastomermaterials, welches die Schritte umfasst:
- die Bereitstellung einer Reaktionsmischung umfassend einen Anteil eines Siloxan-Polymermaterials und einen Anteil eines Polyolefin-Elastomermaterials;
- und die Additionsvernetzung der beiden Materialien.

Werden die erfindungsgemäßen Hybridelastomermaterialien in einem Spritzgußverfahren hergestellt, wird die dabei verwendete Reaktionsmischung typischerweise aus zwei Mischungskomponenten hergestellt, die im Folgenden auch als Komponenten A und B bezeichnet werden. Beide Komponenten A und B werden erst kurz vor dem Einspritzen zusammengeführt, beispielsweise in einem statischen Mischer einer Spritzgußmaschine miteinander vermischt. Bevorzugt werden die Viskositäten der Komponenten A und B einander angepasst, um eine möglichst homogene, feindisperse Verteilung beim Vermischen zu erzielen. Dies ist aus den folgenden Rezepturbeispielen ersichtlich.

Bevorzugt wird bei dem erfindungsgemäßen Verfahren die Reaktionsmischung aus einer Komponente A und einer Komponente B hergestellt, wobei die Komponente A einen Anteil eines ersten Polysiloxanmaterials, einen Anteil eines Polyolefinmaterials und einen Katalysator für die Additionsvernetzung umfasst, und wobei die Komponente B einen Anteil des ersten Polysiloxanmaterials und einen Anteil eines zweiten, vom ersten Polysiloxanmaterial verschiedenen (Poly)silo-xanmaterials umfasst, wobei das erste Polysiloxanmaterial ein Vinylpolysiloxan mit terminalen Vinylgruppen umfasst und das zweite (Poly)siloxanmaterial ein (Poly)siloxan mit seiten- und/oder endständigen SiH-Gruppen umfasst.

Während nur die Komponente A einen Katalysator und optional einen Verzögerer enthält, wird ein Vernetzungsmittel dagegen nur der Komponente B zugesetzt, die gegebenenfalls zusätzlich auch noch einen Anteil eines Verzögerers beinhalten kann. Der Verzögerer wird in der Summe der Anteile in beiden Komponenten A und B im Bereich von 0 bis ca. 600 ppm, bezogen auf das Gesamtgewicht der Reaktionsmischung, eingesetzt.

Gemäß einem weiteren Aspekt des erfindungsgemäßen Verfahrens umfasst die Reaktionsmischung einen Füllstoff, insbesondere in Form eines hydrophobierten und/oder hydrophilen mineralischen Füllstoffs.

Des Weiteren kann bei dem erfindungsgemäßen Verfahren der Füllstoff in einem Masterbatch bereitgestellt werden und das Masterbatch der Reaktionsmischung zugegeben werden, vorzugsweise als Bestandteil der Komponente A und/oder der Komponente B.

Die vorliegende Erfindung betrifft des Weiteren einen Polymerelektrolyt-Brennstoffzellenstack mit einer Mehrzahl an Brennstoffzellen, wobei der Stack Dichtungselemente umfasst, welche unter Verwendung eines erfindungsgemäßen Hybridelastomermaterials hergestellt sind.

Die Erfindung betrifft ferner die Verwendung der erfindungsgemäßen Hybridelastomermaterialien in einem Siebdruckverfahren. Im Siebdruckverfahren hergestellte Beschichtungen lassen sich insbesondere auch als Dichtungselemente von Brennstoffzellen ausbilden. Mit dem Siebdruckverfahren können insbesondere auch Beschichtungen mit Schichtdicken im Bereich von ca. 10 µm bis ca. 500 µm, bevorzugt ca. 10 µm bis ca. 150 µm, weiter bevorzugt von ca. 60 µm bis ca. 120 µm auf einem Substrat aufgetragen werden. Bei statischer Belastung sind die Schichtdicken insbesondere von ungefähr 100 µm geeignet, für elastische Anwendungen betragen besonders geeignete Schichtdicken ca. 80 µm bis ca. 100 µm. Solche Beschichtungen können optional mit einer geschlossen-zelligen, porösen Struktur ausgebildet werden, welche sich in unterschiedlicher Weise erzeugen lässt, wie weiter unten noch näher erläutert wird.

Bei solchen Anwendungen werden gemäß einer ersten Variante erfindungsgemäße Hybridelastomere mit einem Füllstoffanteil von bis zu ca. 30 Gew.-%, insbesondere auch ca. 20 Gew.-% und des Weiteren auch bis ca. 10 Gew-% verwendet. Typischerweise beträgt der Füllstoffanteil zumindest ca. 5 Gew.-%. Der Füllstoff wird optional auch aus expandierbaren/expandierten Glass- oder Keramikmaterialien ausgewählt. Wie schon erwähnt eignen sich auch Polymerpartikel auf der Basis von Polyurethan, Polyethylen, Polypropylen, Polyacrylat und Polycarbonat. Die Porengrößen in diesen Füllstoffen können beispielsweise ca. 1 µm bis ca. 200 µm betragen. Die Poren-/Schaumstruktur einer Beschichtung lässt sich auch durch beim Aushärten des Polymers der Beschichtung expandierbare Polymerpartikel erzeugen.

Insbesondere eignen sich als Füllstoffe für Hybridelastomere mit einer Porenstruktur feinkörnige Pulver mit einer Partikelgröße von ca. 10 µm bis ca. 200 µm in Form von porösen Glaspartikeln.

Vorzugsweise werden unter Zugabe vorgegebener Mengen an solchen Füllstoffen Dichten des porösen Hybridelastomermaterials von ca. 0,7 g/cm³ bis ca. 1,1 g/cm³ realisiert, wobei dabei die mechanischen Eigenschaften, insbesondere die Reißfestigkeit und Reißdehnung des Hybridelastomermaterials im Wesentlichen erhalten bleiben.

Geeignete poröse Glaspartikel sind unter der Handelsbezeichnung SPHERICEL^{®} 11W34G (mittlere Partikelgröße ca. 30 bis ca. 40 µm) oder 34P30 (mittlere Partikelgröße ca. 30 µm) aus geschmolzenem Borsilikat-Glas von Potters Industries Inc. erhältlich. Ebenso eignen sich poröse Glaspartikel vom Typ PORAVER^{®} mit mittleren Partikelgrößen von ca. 40 bis ca. 200 µm der Firma Dennert Poraver GmbH.

Gemäß einer zweiten Variante können polymere poröse Partikel als Füllstoff verwendet werden, die häufig mittlere Porengrößen im Bereich von ca. 1 µm bis ca. 200 µm, bevorzugt ca. 1 µm bis ca. 10 µm, aufweisen. Konkrete Beispiele hierfür sind EXPANCEL^{®}-Produkte vom Typ DE(T), WE und FG mit mittleren Partikelgrößen von ca. 5 µm bis ca. 100 µm, erhältlich von Akzo Nobel Pulp and Performance Chemicals AB. Die polymeren porösen Partikel können in einer Menge von bis zu 4 Gew.-%, vorzugsweise bis zu ca. 2 Gew.-% in den erfindungsgemäßen Hybridelastomeren verwendet werden, ohne dass sie die Silikonvernetzung beeinträchtigen.

Gemäß einer dritten Variante wird eine geschlossen-zellige, poröse Struktur in situ oder vorab in dem erfindungsgemäßen Hybridelastomermaterial erzeugt. Zur Erzeugung einer solchen Poren- oder Zellstruktur können Partikel auf der Basis von Polyurethan, Polyethylen, Polypropylen, Polyacrylaten und Polycarbonaten verwendet werden, welche in einem geeigneten Lösemittel (bevorzugt ausgewählt aus reinen Kohlenwasserstoffen) unter Aufnahme des Lösemittels gequollen und danach unter Eintrag von Wärmeenergie unter Expansion die Porenstruktur ausbilden. Die Zudosierung solcher Füllstoffe zu erfindungsgemäßen Hybridelastomeren wird vorzugsweise auf ca. 2 Gew.-% oder weniger beschränkt, wobei auch dann eine Dichte des Hybridelastomermaterials im Bereich von ca. 0,7 g/cm³ bis ca. 1,1 g/cm³ erzielt werden kann, ohne dass dessen mechanische Eigenschaften, insbesondere die Reißfestigkeit und die Reißdehnung, zu stark beeinträchtigt werden.

Beispiele für Partikel mit Partikelgrößen von ca. 5 µm bis ca. 100 µm, die sich im obigen Sinne expandieren lassen und die kommerziell erhältlich sind, sind EXPANCEL^{®}-Typen DU, WU, MB und SL erhältlich von Akzo Nobel Pulp and Performance Chemicals AB oder auch Partikel vom Typ TRACEL^{®} INC, NC und NCS der Firma Tramaco GmbH.

Diese und weitere Aspekte der erfindungsgemäßen Hybridelastomermaterialien und der darin verwendeten Hybridelastomeren werden anhand der folgenden Beispiele und den Figuren noch näher erläutert.

### BEISPIELE

Erfindungsgemäße Hybridelastomermaterialien werden unter Verwendung eines Siloxan-Polymermaterials und eines Polyolefin-Elastomermaterials hergestellt.

Für die Bereitstellung des Siloxan-Polymermaterials wird bevorzugt ein sogenanntes Flüssig-Silikon (auch LSR oder Liquid Silicon Rubber genannt) verwendet, welches auf einem Zwei-Komponenten (2K)-Additionssystem aus der Gruppe der Silikonelastomeren basiert.

Im Labormaßstab können auch Ein-Komponenten (1K)-Mischungen hergestellt werden, deren Lagerzeit aber begrenzt ist, so dass für die industrielle Nutzung die 2K-Additionssysteme bevorzugt sind.

Zur Bereitstellung des Zwei-Komponenten-Additionssystems werden zwei gebrauchsfertige Vormischungen, im Folgenden Komponente A und Komponente B genannt, hergestellt, welche typischerweise im Verhältnis 1 : 1 miteinander gemischt werden. Die zwei Komponenten A und B beinhalten jeweils einen Anteil eines sogenannten weiter unter näher beschriebenen Masterbatches, das bevorzugt einen hydrophobierten und/oder hydrophilen Füllstoff bereitstellt, und sind vereinfacht folgendermaßen aufgebaut:
Komponente A
   - Masterbatch
   - Vinyl-Siloxanpolymer mit terminal angeordneten Vinylgruppen (Formel (II))
   - Platinkatalysator
   - optional ein Verzögerer zur Anpassung der Reaktionskinetik
   - optional weitere funktionelle Additive oder Füllstoffe
Komponente B
   - Masterbatch
   - Vinyl-Siloxanpolymer mit terminal angeordneten Vinylgruppen (Formel (II))
   - Vernetzer in Form eines seitenständig H-modifizierten Siloxans (Formel (I))
   - Kettenverlängerer in Form eines endständig H-modifizierten Siloxans (Formel (I))
   - Vernetzungsmittel (Crosslinker) der Formel (III)
   - optional ein Verzögerer zur Anpassung der Reaktionskinetik
   - optional weitere funktionelle Additive oder Füllstoffe

Funktionelle Additive kommen optional zum Einsatz, um die Eigenschaften des erfindungsgemäßen Hybridelastomermaterials für spezifische Anwendungen zu optimieren, insbesondere auch dessen chemische Beständigkeit.

Das in den Komponenten A und B jeweils verwendete Masterbatch umfasst ein Vinyl-Siloxanpolymer mit terminalen Vinylgruppen (Formel (II)) als Reaktionsmedium, welches gemäß den folgenden Beispielen mit in-situ hergestellter, hydrophobierter Kieselsäure versetzt ist.

Hydrophobierte Kieselsäure lässt sich z.B. dadurch herstellen, dass hydrophile, pyrogene Kieselsäure mit dem Vinyl-Siloxanpolymeren der Formel (II), das in dieser Stufe als Reaktionsmedium fungiert, in einem Doppel-Z-Austrags-Kneter im Wesentlichen homogen vermischt wird. Dabei werden die hydrophilen OH-Gruppen der Kieselsäure durch Trimethylsilylgruppen der zugesetzten Hydrophobierungsmittel ersetzt. Die Herstellung solcher Produkte ist allgemein bekannt und z.B. im Patent EP 0 378 785 A1, Beispiele 5 und 7, beschrieben.

Ein spezielles Beispiel für eine Zusammensetzung eines Masterbatches, mit dem eine hydrophobierte pyrogene Kieselsäure bereitgestellt werden kann, ist in der folgenden Tabelle 2 als Masterbatch 1 aufgeführt. Diese Zusammensetzung dient gleichzeitig als Masterbatch in den meisten der folgenden Beispiele.

**Tabelle 2 (Masterbatch 1; MBA 37130)**

| Anteil [Gew.-%] | Bestandteil/Funktion | Erhältlich als |
|---|---|---|
| 61,0 | Vinyl-Polysiloxan mit terminalen Vinylgruppen (10.000 mPas) Formel (II), Vinylgehalt 0,03 mmol/g/Basispolymer | HANSA SFA 42103 |
| 4,0 | Hexamethyldisilazan (HDMS)/Hydrophobierungsmittel | |
| 1,0 | 1,3-Divinyltetramethyldisilazan (1,3-DVTMDS)/ Hydrophobierungsmittel | |
| 2,0 | deionisiertes Wasser/Katalysator | |
| 32,0 | hydrophile pyrogene Kieselsäure/Füllstoff | AEROSIL 300V, Evonik |

Neben dem Masterbatch 1 der Tabelle 2 kann alternativ ein Masterbatch 2 gemäß Tabelle 3 verwendet werden, welches bezüglich der verwendeten Füllstoffe vom Masterbatch 1 abweicht, d.h. zwecks Hydrophobierung und weiterer Füllstoffverstärkung ein Gemisch aus zwei verschiedenen Kieselsäuren, d.h. zusätzlich zu Aerosil 300V auch Aerosil 814 (Evonik Industries) beinhaltet (siehe Beispiel 3, BF146). Die Konzentrationen des Masterbatches 2 in den Komponenten A und B der Rezeptur von Beispiel 3 (BF146) weichen von denen der Rezeptur des Beispiels 2 (BF131) ab.

**Tabelle 3 (Masterbatch 2)**

| Anteil [Gew.-%] | Bestandteil/Funktion | Erhältlich als |
|---|---|---|
| 61,0 | Vinyl-Polysiloxan mit terminalen Vinylgruppen (10.000 mPas) Formel (II)/Basispolymer | HANSA SFA 42103 |
| 4,0 | Hexamethyldisilazan (HDMS)/Hydrophobierungsmittel | |
| 1,0 | 1,3-Divinyltetramethyldisilazan (1,3 DVTMDS)/ Hydrophobierungsmittel | |
| 2,0 | deionisiertes Wasser/Katalysator | |
| 16,0 | hydrophile pyrogene Kieselsäure/Füllstoff | AEROSIL 300V, Evonik |
| 16,0 | hydrophobe Kieselsäure/Füllstoff | AEROSIL 814, Evonik |

Ferner kann ein Masterbatch 3 gemäß Tabelle 3A zum Einsatz kommen auf welches auch im Folgenden als MBA 37121 verwiesen wird.

**Tabelle 3A (Masterbatch 3; MBA 37121)**

| Anteil [Gew.-%] | Bestandteil/Funktion | Erhältlich als |
|---|---|---|
| 69,5 | Vinyl-Polysiloxan mit terminalen Vinylgruppen (10.000 mPas) Formel (II)/Basispolymer | HANSA SFA 42103 |
| 3,0 | Hexamethyldisilazan (HDMS)/Hydrophobierungsmittel | |
| 0,5 | 1,3-Divinyltetramethyldisilazan (1,3 DVTMDS)/ Hydrophobierungsmittel | |
| 2,0 | deionisiertes Wasser/Katalysator | |
| 25,0 | hydrophile Kieselsäure/Füllstoff | SIPERNAT 160; Evonik |

Für die separate Herstellung der Komponenten A und B der folgenden Beispiele wird ein Planeten-Dissolver verwendet, der folgenden Anforderungen genügt:
Das Rührgefäß fasst ca. 1 Liter und ist mit einem Doppelmantel mit Kühlwasseranschluss versehen. Eine Vakuumpumpe wird zum Entlüften der Mischung benötigt. Die Abfüllung am Planetendissolver erfolgt mit Hilfe einer Presse unter Druck.

Die Komponenten A und B beinhalten jeweils einen Anteil eines Vinyl-Polysiloxans mit terminalen Vinylgruppen (65.000 mPas)(Basispolymer), erhältlich als Silopren U65 von Momentive Performance Materials GmbH oder als ALPA-VINYLPOLYMER 65 von CHT Germany GmbH, dessen Anteil zur Angleichung der Viskositäten der jeweiligen Komponente variiert wird.

Wie weiter oben schon beschreiben gelten bevorzugt folgende Parameter für die Zusammensetzung der Gesamtmasse der erfindungsgemäßen Hybridelastomermaterialien:
Die Anteile des/der Siloxan-Polymeren der Formeln (I) und gegebenenfalls (II) an der Gesamtmasse des Polymeranteils des erfindungsgemäßen Hybridelastomermaterials beträgt vorzugsweise ca. 50 Gew.-% bis ca. 90 Gew.-%, weiter bevorzugt ca. 60 bis ca. 70 Gew.-%.

Weiter bevorzugt wird das Siloxan-Polymer der Formel (I) in Form einer Mischung von Polymeren mit einer dynamischen Viskosität von ca. 10.000 mPas (n ≈ 850) und 1.000 mPas (n ≈ 350), wobei das Gewichtsverhältnis dieser Einheiten bevorzugt ca. 1 : 2 beträgt. Der Gesamtanteil dieser Siloxan-Polymere an der Zusammensetzung des erfindungsgemäß verwendeten Hybridelastomeren beträgt vorzugsweise ca. 62 bis ca. 67 Gew.-%.

Des Weiteren wird in einem bevorzugten Siloxan-Polymermaterial ein Siloxan-Polymer der Formel (I) eingesetzt, welches endständige SiH-Gruppen aufweist und so die Funktion eines Kettenverlängerers übernehmen kann. Der Anteil dieses Siloxan-Polymers am Siloxan-Polymermaterial beträgt vorzugsweise ca. 1 bis ca. 10 Gew.-%, besonders bevorzugt ca. 1 bis ca. 3 Gew.-%.

Innerhalb dieser bevorzugten Vorgaben ist eine breite Variation der einzelnen Bestandteile von Rezepturen möglich wie dies in den folgenden Tabellen 4A und 4B für die Komponenten A und B zusammengefasst ist:

**Tabelle 4A (Komponente A)**

| Anteil [Gew.-%] | Bestandteil |
|---|---|
| 1 - 80 | Masterbatch mit hydrophobiertem Füllstoff und Basis-Siloxanpolymer (z.B. Vinyl-Polysiloxan mit terminalen Vinylgruppen) |
| 1 - 50 | Basis-Siloxanpolymer (z.B. Polysiloxan mit terminalen Vinylgruppen) |
| 1 - 30 | Elastomeres Polyolefin (z.B. 1,2-Polybutadien) |
| 1 - 10 | inerter Füllstoff (z.B. TiO₂-Pigment) |
| 1 - 10 | modifizierter inerter Füllstoff (z.B. modifiziertes TiO₂-Pigment) |
| 1 - 50 ppm | Additions-Katalysator (z.B. Pt(0) Karstedt-Komplex) |

**Tabelle 4B (Komponente B)**

| Anteil [Gew.-%] | Bestandteil |
|---|---|
| 1 - 80 | Masterbatch mit hydrophobiertem Füllstoff und Basis-Siloxanpolymer (z.B. Vinyl-Polysiloxan mit terminalen Vinylgruppen) |
| 1 - 50 | Basis-Siloxanpolymer (z.B. Polysiloxan mit terminalen Vinylgruppen) |
| 1 - 20 | Polysiloxan mit Vernetzer-Funktion |
| 1 - 10 | Polysiloxan mit Kettenverlängerer-Funktion |
| 1 - 10 | Polysiloxan mit Crosslinker-Funktion |
| 0 - 1 | optionaler Retarder |

Komponente A enthält neben dem Masterbatch, z.B. der Tabelle 2 (ALPA MBA 37130), den Platin-Katalysator und ein Basispolymer (z.B. Flüssigsilikon Silopren U65, Viskosität: 65000 mPas, Hersteller: Momentive Performance Materials GmbH), dessen Anteil zur Angleichung der Viskosität an die Viskosität der Komponente B variiert werden kann.

Komponente A enthält bevorzugt einen silicophilen Katalysatorkomplex basierend auf Platin, z.B. Katalysatorsysteme nach Ossko, Osborn-Fisher, Ashby, Markó, vorzugsweise aber Karstedt-Katalysatoren.

Weitere Übergangsmetallkomplexe können auch auf anderen Zentralatomen der Platingruppe basieren, d.h. Rh, Ru, Ir, Os, Pd. Ruthenium-Komplexe nach dem Patent EP 2 004 663 B1 (Wacker AG), sowie Ruthenium-Sulfoxid-Komplexe nach dem Patent EP 2 285 814 B1 (Wacker AG) seien hier aufgeführt. Die Liganden sollten einen silicophilen Charakter aufweisen. Ferner seien Übergangsmetallkomplexe der Lanthanoidgruppe genannt, die nicht dem Chalk-Harrod-Mechanismus gehorchen. Die Konzentration des Katalysators in der Komponente A kann in einem weiten Bereich von ca. 5 bis ca. 1000 ppm variiert werden, vorzugsweise liegt die Konzentration im Bereich von ca. 30 bis ca. 80 ppm. In der Gesamtrezeptur liegt der Katalysator in der halben Konzentration vor, da die Komponente A mit der Komponente B, die keinen Katalysator enthält, im Verhältnis 1 : 1 gemischt wird.

Komponente B enthält neben dem Masterbatch, z.B. der Tabelle 2 (ALPA MPA 37130), dagegen eine Kombination verschiedener Vernetzungsmittel, beispielsweise sogenannte Standard-Crosslinker (Hansa SFA 11230) oder Soft-Crosslinker (Hansa SFA 11340), und einen Kettenverlängerer (Hansa SFA 12010). Des Weiteren enthält die Komponente B das Vinyl-Polysiloxan mit terminalen Vinylgruppen (Silopren U65), dessen Anteil ebenfalls zur Anpassung der Viskosität an die Viskosität der Komponente A modifiziert werden kann, und gegebenenfalls auch einen Verzögerer, beispielsweise 1-Ethinyl-1-cyclohexanol (ECH).

Die Konzentration und der chemische Aufbau der in der Komponente B enthaltenen sogenannten Standard- und Soft-Crosslinker (Vernetzungsmittel) beeinflussen den Umsatz und die Kinetik der chemischen Vernetzungsreaktion.

Die Siloxan-Vernetzungsmittel und -Kettenverlängerer in der Komponente B, z.B. Hansa SFA 11340, Hansa SFA 11230 und Hansa SFA 12010, weisen entlang der Hauptkette und/oder endständig reaktive SiH-Einheiten auf. Das breite Spektrum der verfügbaren Hansa-SFA-Produkte der CHT Germany GmbH entsprechen den Formeln (II) und (III). Sie können gemeinsam mit ca. 1 bis zu ca. 30 Gew.-% in der Komponente B enthalten sein, vorzugsweise mit ca. 12 bis ca. 20 Gew.-%.

Die ALPA- und HANSA-Bestandteile der Komponenten A und B der folgenden Beispiele sind kommerziell verfügbar von CHT Germany GmbH.

### Beispiel 1 erfindungsgemäß (BF 109)

### Komponente A

| Anteil [Gew.-%] | Bestandteil | Erhältlich als |
|---|---|---|
| 63,0 | Masterbatch 1 Tabelle 2 | ALPA-MBA 37130 |
| 24,99 | Polysiloxan mit terminalen Vinylgruppen (65.000 mPas), Vinylgehalt: 0,03 mmol/g, Formel (II) | ALPA-VINYLPOLYMER 65 |
| 0,01 | Pt(0)-Karstedt-Katalysator | ALPA-KAT 1 |
| 4,0 | 1,2-Polybutadien | B-3000, Nippon Soda, Japan |
| 6,0 | TiO₂-Pigment | IRIOTEC 8850, Merck KGaA |
| 2,0 | TiO₂-Pigment | KRONOS 2300, Kronos Titan GmbH |

630 g des Masterbatches 1 der Tabelle 2, 249,9 g Vinyl-Polysiloxan mit terminalen Vinylgruppen (65.000 mPas) (Formel (II)) und 40 g 1,2 Polybutadien werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 60 g des TiO₂-Pigments IRIOTEC 8850 und 20 g des TiO₂-Pigments KRONOS 2300 bei der gleichen Drehgeschwindigkeit eingearbeitet. Sobald die Masse homogen ist (nach ca. 60 Minuten), werden 0,1 g des Pt(0)-Karstedt-Katalysators zugegeben und die ganze Masse zwei Stunden unter Vakuum von 100 mbar in dem Dissolver homogenisiert. Die Temperatur muss unter 30 °C gehalten werden.

### Komponente B

| Anteil [Gew.-%] | Bestandteil | Erhältlich als |
|---|---|---|
| 69,65 | Masterbatch 1 Tabelle 2 | ALPA-MBA 37130 |
| 10,12 | Polysiloxan mit terminalen Vinylgruppen (65.000 mPas), Vinylgehalt: 0,03 mmol/g, Formel (II) | ALPA-VINYLPOLYMER 65 |
| 12,6 | Polysiloxan der Formel (III) (200 mPas), H-Gehalt 2,4 mmol/g | HANSA SFA 11230 |
| 2,36 | Polysiloxan der Formel (I) (35 mPas) | HANSA SFA 12010 |
| | H-Gehalt 1,4 mmol/g | |
| 5,27 | Polysiloxan der Formel (III) (4000 mPas) | HANSA SFA 11340 |
| | H-Gehalt 0,31 mmol/g | |

696,5 g des Masterbatches 1 der Tabelle 2 und 101,2 g Vinyl-Polysiloxan mit terminalen Vinylgruppen (65.000 mPas) der Formel (II) werden in das Rührgefäß des Planeten-Dissolvers eingewogen und 10 Minuten bei einer Drehgeschwindigkeit von 10 U/min des Planetenantriebs und 1.000 U/min des Dissolvers homogenisiert. Danach werden 126 g Polysiloxan vom Typ HANSA SFA 11230 als Vernetzer, 23,6 g Polysiloxan vom Typ HANSA SFA 12010 als Kettenverlängerer und 52,7 g Polysiloxan vom Typ HANSA SFA 11340 als Passivierungsmittel bei der gleichen Drehgeschwindigkeit eingearbeitet. Sobald die Masse homogen ist (nach ca. 30 Minuten) wird unter Vakuum von 100 mbar weitere 2 Stunden homogenisiert. Die Temperatur muss unter 30 °C gehalten werden.

Die Komponenten A und B werden im Gewichtsverhältnis 1 : 1 miteinander vermischt und die Polymerbestandteile einer Additionsvernetzung unterzogen wie weiter unten beschrieben.

### Beispiele 1A, 1B, 1C und 1D (erfindungsgemäß)

In den Beispielen 1A, 1B und 1C wird jeder der beiden Komponenten A und B des Beispiels 1 beim Mischen des Masterbatches mit der Vinyl-Polysiloxan-Komponente 2 Gew.-%, bezogen auf die jeweilige Rezeptur, eines Füllstoffs zur Bildung einer geschlossen-zelligen, porösen Zellstruktur zugemischt; in Beispiel 1D werden 5 Gew.-% Füllstoff, bezogen auf das Gesamtgewicht der Rezeptur zugemischt.

| Beispielvarianten | Füllstofftyp | Mittlere Partikelgröße [µm] | Dichte [g/cm³] | Erhältlich als |
|---|---|---|---|---|
| Beispiel 1A | PU-Copolymer | 140 | 0,03 | UNICELL MS140 DS |
| Beispiel 1B | PU-Copolymer | 40 | 0,02 | Expancel461 D40 |
| Beispiel 1C | Glas-Mikrokugeln | 90 | 0,12 | Q-Cel 300 |
| Beispiel 1D | Glas-Mikrokugeln | 85 | 0,14 | Q-Cel 6014 |

UNICELL-Füllstoffe sind erhältlich von Tramaco GmbH
Expancel-Füllstoffe sind erhältlich von Akzo Nobel Pulp and Performance Chemicals AB
Q-Cel Füllstoffe sind erhältlich von Potters Industries LLC (The Cary Company)

### Beispiel 1E erfindungsgemäß (BF 109B)

Die Rezeptur entspricht insgesamt dem Beispiel 1 mit der Ausnahme, dass in der Komponente A anstelle des 1,2 Polybutadiens B-3000 das hydrierte Polybutadien BI-3015 mit 4,0 Gew.-% enthalten ist. Die Herstellung des Hybridelastomers erfolgt wie in Beispiel 1 (BF 109).

### Beispiel 2 erfindungsgemäß (BF 131)

### Komponente A

| Anteil [Gew.-%] | Bestandteil | Erhältlich als |
|---|---|---|
| 62,88 | Masterbatch 1 Tabelle 2 | ALPA-MBA 37130 |
| 19,0 | Polysiloxan mit terminalen Vinylgruppen (65.000 mPas), Vinylgehalt: 0,03 mmol/g, Formel (II) | ALPA-VINYLPOLYMER 65 |
| 0,09 | Pt(0)-Karstedt-Katalysator | ALPA-KAT 1 |
| 2,6 | 1,2-Polybutadien | B-3000, Fa. Nippon Soda, Japan |
| 13,43 | Silikonharz | MQ-OH 7, Milliken Chemical |
| 2,0 | TiO₂-Pigment | KRONOS 2300, Kronos Titan GmbH |

628,8 g des Masterbatches 1 der Tabelle 2, 190 g Vinyl-Polysiloxan mit terminalen Vinylgruppen (65.000 mPas) der Formel (II) und 26 g 1,2-Polybutadien werden in das Rührgefäß des Planeten-Dissolvers eingewogen und 10 Minuten bei einer Geschwindigkeit von 10 U/min des Planetenantriebs und 1000 U/min des Dissolvers homogenisiert. Danach werden 134,3 g des Silikonharzes als hydrophobierende und mechanisch verstärkende Komponente bei der gleichen Drehgeschwindigkeit eingearbeitet. Danach werden 20 g des TiO₂-Pigments bei der gleichen Drehgeschwindigkeit eingearbeitet. Sobald die Masse homogen ist (ca. 60 Minuten), werden 0,9 g des Pt(0)-Karstedt-Katalysators zugegeben und die ganze Masse zwei Stunden unter Vakuum von 100 mbar homogenisiert. Die Temperatur muss unter 30 °C gehalten werden.

### Komponente B

| Anteil [Gew.-%] | Bestandteil | Erhältlich als |
|---|---|---|
| 61,57 | Masterbatch 1 Tabelle 2 | ALPA-MBA 37130 |
| 11,25 | Polysiloxan mit terminalen Vinylgruppen (65.000 mPas), Vinylgehalt: 0,03 mmol/g, Formel (II) | ALPA-VINYLPOLYMER 65 |
| 16,2 | Polysiloxan der Formel (III) (200 mPas) H-Gehalt 2,4 mmol/g | HANSA SFA 11230 |
| 2,15 | Polysiloxan der Formel (I) (35 mPas) H-Gehalt 1,4 mmol/g | HANSA SFA 12010 |
| 4,79 | Polysiloxan der Formel (III) (4000 mPas) H-Gehalt 0,31 mmol/g | HANSA SFA 11340 |
| 0,74 | 1,2-Polybutadien | B-3000, Nippon Soda, Japan |
| 3,3 | Silikonharz | MQ-OH 7, Milliken Chemical |

615,7 g des Masterbatches 1 der Tabelle 2 und 112,5 g Vinyl-Polysiloxan mit terminalen Vinylgruppen (65.000 mPas) der Formel (II) werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 162 g Polysiloxan vom Typ HANSA SFA 11230 als Vernetzer, 21,5 g Polysiloxan vom Typ HANSA SFA 12010 als Kettenverlängerer und 47,9 g Polysiloxan vom Typ HANSA SFA 11340 als Passivierungsmittel bei der gleichen Geschwindigkeit eingearbeitet. Sobald die Masse homogen ist (nach ca. 60 Minuten), werden 7,4 g 1,2-Polybutadien und 33 g Silikonharz zugegeben und die ganze Masse bei einem Vakuum von 100 mbar für zwei Stunden homogenisiert. Die Temperatur muss unter 30 °C gehalten werden.

Die Komponenten A und B werden im Gewichtsverhältnis 1 : 1 miteinander vermischt und die Polymerbestandteile einer Additionsvernetzung unterzogen wie weiter unten beschrieben.

### Beispiel 3 erfindungsgemäß (BF146)

### Komponente A

| Anteil [Gew.-%] | Bestandteil | Erhältlich als |
|---|---|---|
| 65,14 | Masterbatch 2 Tabelle 3 | |
| 24,0 | Polysiloxan mit terminalen Vinylgruppen (65.000 mPas), Vinylgehalt: 0,03 mmol/g, Formel (II) | ALPA-VINYLPOLYMER 65 |
| 3,6 | 1,2-Polybutadien | B-3000, Nippon Soda, Japan |
| 1,9 | TiO₂-Pigment | KRONOS 2300, Kronos Titan GmbH |
| 5,35 | modifiziertes TiO₂-Pigment | Iriotec 8850, Merck KGaA |
| 0,01 | Pt(0)-Karstedt-Katalysator | ALPA-KAT 1 |

651,4 g des Masterbatches 2 der Tabelle 3, 240 g Vinyl-Polysiloxan mit terminalen Vinylgruppen (65.000 mPas) der Formel (II) und 36 g 1,2-Polybutadien werden in das Rührgefäß des Planeten-Dissolvers eingewogen und 10 Minuten bei einer Geschwindigkeit von 10 U/min des Planetenantriebs und 1000 U/min des Dissolvers homogenisiert. Danach werden 19,0 g des TiO₂-Pigments und 53,5 g des modifizierten TiO₂-Pigments bei der gleichen Drehgeschwindigkeit eingearbeitet. Sobald die Masse homogen ist (ca. 60 Minuten), werden 0,1 g des Pt(0)-Karstedt-Katalysators zugegeben und die ganze Masse zwei Stunden unter Vakuum von 100 mbar homogenisiert. Die Temperatur muss unter 30 °C gehalten werden.

### Komponente B

| Anteil [Gew.-%] | Bestandteil | Erhältlich als |
|---|---|---|
| 65,77 | Masterbatch 2 Tabelle 3 | |
| 10,12 | Polysiloxan mit terminalen Vinylgruppen (65.000 mPas), Vinylgehalt: 0,03 mmol/g, Formel (II) | ALPA-VINYLPOLYMER 65 |
| 16,8 | Polysiloxan der Formel (III) (200 mPas), H-Gehalt 2,4 mmol/g | HANSA SFA 11230 |
| 2,25 | Polysiloxan der Formel (I) (35 mPas) H-Gehalt 1,4 mmol/g | HANSA SFA 12010 |
| 5,0 | Polysiloxan der Formel (III) (4000 mPas) H-Gehalt 0,31 mmol/g | HANSA SFA 11340 |
| 0,06 | 1-Ethinyl-1-cyclohexanol | ALPA Retard A |

657,7 g des Masterbatches 2 der Tabelle 3 und 101,2 g Vinyl-Polysiloxan mit terminalen Vinylgruppen (65.000 mPas) der Formel (II) werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 168 g Polysiloxan vom Typ HANSA SFA 11230 als Vernetzer, 22,5 g Polysiloxan vom Typ HANSA SFA 12010 als Kettenverlängerer und 50,0 g Polysiloxan vom Typ HANSA SFA 11340 als Passivierungsmittel bei der gleichen Geschwindigkeit eingearbeitet. Sobald die Masse homogen ist (nach ca. 60 Minuten), werden 0,6 g 1-Ethinyl-1-cyclohexanol (ECH) als Verzögerer zugegeben und die ganze Masse bei einem Vakuum von 100 mbar für zwei Stunden homogenisiert. Die Temperatur muss unter 30 °C gehalten werden.

Die Komponenten A und B werden im Gewichtsverhältnis 1 : 1 miteinander vermischt und die Polymerbestandteile einer Additionsvernetzung unterzogen, wie weiter unten beschrieben.

### Beispiel 4 (Referenz: Standard LSR-Material ALPA 130201)

### Komponente A

| Anteil [Gew.-%] | Bestandteil | Erhältlich als |
|---|---|---|
| 75,0 | Masterbatch 1 Tabelle 2 | ALPA-MBA 37130 |
| 24,99 | Polysiloxan mit terminalen Vinylgruppen (65.000 mPas), Vinylgehalt: 0,03 mmol/g, Formel (II) | ALPA-VINYLPOLYMER 65 |
| 0,01 | Pt(0)-Karstedt-Katalysator | ALPA-KAT 1 |

750 g des Masterbatches 1 der Tabelle 2 und 249,9 g Vinyl-Polysiloxan mit terminalen Vinylgruppen (65.000 mPas) der Formel (II) werden in das Rührgefäß des Planeten-Dissolvers eingewogen und 10 Minuten bei einer Geschwindigkeit von 10 U/min des Planetenantriebs und 1.000 U/min des Dissolvers homogenisiert. Sobald die Masse homogen ist (nach ca. 60 Minuten) werden 0,1 g Pt(0)-Karstedt-Katalysator zugegeben und die ganze Masse zwei Stunden unter Vakuum von 100 mbar homogenisiert. Die Temperatur muss unter 30 °C gehalten werden.

### Komponente B

| Anteil [Gew.-%] | Bestandteil | Erhältlich als |
|---|---|---|
| 69,65 | Masterbatch 1 Tabelle 2 | ALPA-MBA 37130 |
| 10,12 | Polysiloxan mit terminalen Vinylgruppen (65.000 mPas), Vinylgehalt: 0,03 mmol/g, Formel (II) | ALPA-VINYLPOLYMER 65 |
| 12,6 | Polysiloxan der Formel (III) (200 mPas), H-Gehalt 2,4 mmol/g | HANSA SFA 11230 |
| 2,36 | Polysiloxan der Formel (I) (35 mPas), H-Gehalt 1,4 mmol/g | HANSA SFA 12010 |
| 5,27 | Polysiloxan der Formel (III) (4000 mPas), H-Gehalt 0,31 mmol/g | HANSA SFA 11340 |

696,5 g des Masterbatches 1 der Tabelle 2 und 101,2 g Vinyl-Polysiloxan mit terminalen Vinylgruppen (65.000 mPas) der Formel (II) werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 126 g Polysiloxan vom Typ HANSA SFA 11230 als Vernetzer, 23,6 g Polysiloxan vom Typ HANSA SFA 12010 als Kettenverlängerer und 52,7 g Polysiloxan vom Typ HANSA SFA 11340 als Passivierungsmittel bei der gleichen Geschwindigkeit eingearbeitet. Sobald die Masse homogen ist (nach ca. 30 Minuten), wird unter Vakuum von 100 mbar weitere zwei Stunden homogenisiert. Die Temperatur muss unter 30 °C gehalten werden.

Die Komponenten A und B werden im Gewichtsverhältnis 1 : 1 miteinander vermischt und die Polymerbestandteile einer Additionsvernetzung unterzogen wie im folgenden Abschnitt beschrieben.

### Beispiel 5 erfindungsgemäß (1 Gew.-% Polybutadien-Anteil)

### Komponente A

| Anteil [Gew.-%] | Bestandteil | Erhältlich als |
|---|---|---|
| 72,49 | Masterbatch 1 Tabelle 2 | ALPA-MBA 37130 |
| 22,5 | Polysiloxan mit terminalen Vinylgruppen (65.000 mPas), Vinylgehalt: 0,03 mmol/g, Formel (II) | ALPA-VINYLPOLYMER 65 |
| 0,01 | Pt(0)-Karstedt-Katalysator | ALPA-KAT 1 |
| 1,0 | 1,2-Polybutadien | B-3000, Nippon Soda, Japan |
| 1,0 | TiO₂-Pigment | Iriotec 8850, Merck KGaA |
| 3,0 | TiO₂-Pigment | KRONOS 2300, Kronos Titan GmbH |

724,9 g des Masterbatches 1 der Tabelle 2, 225 g Vinyl-Polysiloxan mit terminalen Vinylgruppen (65.000 mPas) (Formel (II)) und 10 g 1,2 Polybutadien werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 10 g des TiO₂-Pigments Iriotec 8850 und 30 g des TiO₂-Pigments KRONOS 2300 bei der gleichen Drehgeschwindigkeit eingearbeitet. Sobald die Masse homogen ist (nach ca. 60 Minuten) werden 0,1 g des Pt(0)-Karstedt-Katalysators zugegeben und die ganze Masse zwei Stunden unter Vakuum von 100 mbar in dem Dissolver homogenisiert. Die Temperatur muss unter 30 °C gehalten werden.

### Komponente B

| Anteil [Gew.-%] | Bestandteil | Erhältlich als |
|---|---|---|
| 51,44 | Masterbatch 1 Tabelle 2 | ALPA-MBA 37130 |
| 27,31 | Polysiloxan mit terminalen Vinylgruppen (65.000 mPas), Vinylgehalt: 0,03 mmol/g, Formel (II) | ALPA-VINYLPOLYMER 65 |
| 11,9 | Polysiloxan der Formel (III) (200 mPas), H-Gehalt 2,4 mmol/g | HANSA SFA 11230 |
| 1,95 | Polysiloxan der Formel (I) (35 mPas), H-Gehalt 1,4 mmol/g | HANSA SFA 12010 |
| 6,4 | Polysiloxan der Formel (III) (4000 mPas), H-Gehalt 0,31 mmol/g | HANSA SFA 11340 |
| 1,0 | 1,2-Polybutadien | B-3000, Fa. Nippon Soda, Japan |

514,4 g des Masterbatches 1 der Tabelle 2, 273,1 g Vinyl-Polysiloxan mit terminalen Vinylgruppen (65.000 mPas) der Formel (II) und 10 g 1,2-Polybutadien werden in das Rührgefäß des Planeten-Dissolvers eingewogen und 10 Minuten bei einer Drehgeschwindigkeit von 10 U/min des Planetenantriebs und 1.000 U/min des Dissolvers homogenisiert. Danach werden 119 g Polysiloxan vom Typ HANSA SFA 11230 als Vernetzer, 19,5 g Polysiloxan vom Typ HANSA SFA 12010 als Kettenverlängerer und 64 g Polysiloxan vom Typ HANSA SFA 11340 als Passivierungsmittel bei der gleichen Drehgeschwindigkeit eingearbeitet. Sobald die Masse homogen ist (nach ca. 30 Minuten) wird unter Vakuum von 100 mbar weitere 2 Stunden homogenisiert. Die Temperatur muss unter 30 °C gehalten werden.

Die Komponenten A und B werden im Gewichtsverhältnis 1 : 1 miteinander vermischt und die Polymerbestandteile einer Additionsvernetzung unterzogen wie weiter unten beschrieben.

### Beispiel 6 erfindungsgemäß (5 Gew.-% Polybutadien-Anteil)

### Komponente A

| Anteil [Gew.-%] | Bestandteil | Erhältlich als |
|---|---|---|
| 64,46 | Masterbatch 1 Tabelle 2 | ALPA-MBA 37130 |
| 26,2 | Polysiloxan mit terminalen Vinylgruppen (65.000 mPas), Vinylgehalt: 0,03 mmol/g, Formel (II) | ALPA-VINYLPOLYMER 65 |
| 0,04 | Pt(0)-Karstedt-Katalysator | ALPA-KAT 1 |
| 5,0 | 1,2-Polybutadien | B-3000, Fa. Nippon Soda, Japan |
| 2,3 | TiO₂-Pigment | Iriotec 8850, Merck KGaA |
| 2,0 | TiO₂-Pigment | KRONOS 2300, Kronos Titan GmbH |

644,6 g des Masterbatches 1 der Tabelle 2, 262 g Vinyl-Polysiloxan mit terminalen Vinylgruppen (65.000 mPas) der Formel (II) und 50 g 1,2-Polybutadien werden in das Rührgefäß des Planeten-Dissolvers eingewogen und 10 Minuten bei einer Geschwindigkeit von 10 U/min des Planetenantriebs und 1000 U/min des Dissolvers homogenisiert. Danach werden 23 g des TiO₂-Pigments Iriotec 8850 und 20 g des TiO₂-Pigments KRONOS 2300 bei der gleichen Drehgeschwindigkeit eingearbeitet. Sobald die Masse homogen ist (ca. 60 Minuten) werden 0,4 g des Pt(0)-Karstedt-Katalysators zugegeben und die ganze Masse zwei Stunden unter Vakuum von 100 mbar homogenisiert. Die Temperatur muss unter 30 °C gehalten werden.

### Komponente B

| Anteil [Gew.-%] | Bestandteil | Erhältlich als |
|---|---|---|
| 52,19 | Masterbatch 1 Tabelle 2 | ALPA-MBA 37130 |
| 24,31 | Polysiloxan mit terminalen Vinylgruppen (65.000 mPas), Vinylgehalt: 0,03 mmol/g, Formel (II) | ALPA-VINYLPOLYMER 65 |
| 12,1 | Polysiloxan der Formel (III) (200 mPas), H-Gehalt 2,4 mmol/g | HANSA SFA 11230 |
| 2,1 | Polysiloxan der Formel (I) (500 mPas), H-Gehalt 0,163 mmol/g | HANSA SFA 12010 |
| 4,3 | Polysiloxan der Formel (III) (4000 mPas) H-Gehalt 0,31 mmol/g | Hansa SFA 11340 |
| 5,0 | 1,2-Polybutadien | B-3000, Nippon Soda, Japan |

521,9 g des Masterbatches 1 der Tabelle 2 und 243,1 g Vinyl-Polysiloxan mit terminalen Vinylgruppen (65.000 mPas) der Formel (II) werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 121 g Polysiloxan vom Typ HANSA SFA 11230 als Vernetzer, 21 g Polysiloxan vom Typ HANSA SFA 12010 als Kettenverlängerer und 43 g Hansa SFA 11340 bei der gleichen Geschwindigkeit eingearbeitet. Sobald die Masse homogen ist (nach ca. 60 Minuten) werden 50 g 1,2-Polybutadien und die ganze Masse bei einem Vakuum von 100 mbar für zwei Stunden homogenisiert. Die Temperatur muss unter 30 °C gehalten werden.

Die Komponenten A und B werden im Gewichtsverhältnis 1 : 1 miteinander vermischt und die Polymerbestandteile einer Additionsvernetzung unterzogen wie weiter unten beschrieben.

### Beispiel 7 erfindungsgemäß (10 Gew.-% Polybutadien-Anteil) (CL253)

### Komponente A

| Anteil [Gew.-%] | Bestandteil | Erhältlich als |
|---|---|---|
| 61,32 | Masterbatch 1 Tabelle 2 | ALPA-MBA 37130 |
| 22,65 | Polysiloxan mit terminalen Vinylgruppen (65.000 mPas), Vinylgehalt: 0,03 mmol/g, Formel (II) | ALPA-VINYLPOLYMER 65 |
| 0,35 | Pt(0)-Karstedt-Katalysator | ALPA-KAT 1 |
| 10,0 | 1,2-Polybutadien | B-3000, Fa. Nippon Soda, Japan |
| 4,26 | Modifiziertes TiO₂-Pigment | Iriotec 8850, Merck KGaA |
| 1,42 | TiO₂-Pigment | KRONOS 2300, Kronos Titan GmbH |

613,2 g des Masterbatches 1 der Tabelle 2, 226,5 g Vinyl-Polysiloxan mit terminalen Vinylgruppen (65.000 mPas) der Formel (II) und 100 g 1,2-Polybutadien werden in das Rührgefäß des Planeten-Dissolvers eingewogen und 10 Minuten bei einer Geschwindigkeit von 10 U/min des Planetenantriebs und 1000 U/min des Dissolvers homogenisiert. Danach werden 42,6 g modifiziertes TiO₂-Pigment Iriotec 8850 und 14,2 g TiO₂-Pigment KRONOS 2300 als mechanisch verstärkende Komponenten bei der gleichen Drehgeschwindigkeit eingearbeitet. Sobald die Masse homogen ist (ca. 60 Minuten), werden 3,5 g des Pt(0)-Karstedt-Katalysators zugegeben und die ganze Masse zwei Stunden unter Vakuum von 100 mbar homogenisiert. Die Temperatur muss unter 30 °C gehalten werden.

### Komponente B

| Anteil [Gew.-%] | Bestandteil | Erhältlich als |
|---|---|---|
| 55,89 | Masterbatch 1 Tabelle 2 | ALPA-MBA 37130 |
| 8,6 | Polysiloxan mit terminalen Vinylgruppen (65.000 mPas), Vinylgehalt: 0,03 mmol/g, Formel (II) | ALPA-VINYLPOLYMER 65 |
| 12,28 | Polysiloxan der Formel (III) (200 mPas), H-Gehalt 2,4 mmol/g | HANSA SFA 11230 |
| 13,19 | Polysiloxan der Formel (I) (500 mPas), H-Gehalt 0,163 mmol/g | H-Si 150/2 |
| 0,04 | 1-Ethinyl-1-cyclohexanol | ALPA Retard A |
| 10,0 | 1,2-Polybutadien | B-3000, Nippon Soda, Japan |

558,9 g des Masterbatches 1 der Tabelle 2 und 86 g Vinyl-Polysiloxan mit terminalen Vinylgruppen (65.000 mPas) der Formel (II) werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 122,8 g Polysiloxan vom Typ HANSA SFA 11230 als Vernetzer, 131,9 g Polysiloxan vom Typ H-Si 150/2 als Kettenverlängerer vom Typ bei der gleichen Geschwindigkeit eingearbeitet. Sobald die Masse homogen ist (nach ca. 60 Minuten) werden 100 g 1,2-Polybutadien und 0,40 g Verzögerer ALPA Retard A zugegeben und die ganze Masse bei einem Vakuum von 100 mbar für zwei Stunden homogenisiert. Die Temperatur muss unter 30 °C gehalten werden.

Die Komponenten A und B werden im Gewichtsverhältnis 1 : 1 miteinander vermischt und die Polymerbestandteile einer Additionsvernetzung unterzogen wie weiter unten beschrieben.

### Beispiel 7A erfindungsgemäß

Die Rezeptur entspricht insgesamt dem Beispiel 7 mit der Ausnahme, dass in den Komponente A und B anstelle des 1,2 Polybutadiens B-3000 das hydrierte Polybutadien BI-3015 jeweils mit 10,0 Gew.-% enthalten ist. Die Herstellung des Hybridelastomers erfolgt wie in Beispiel 7.

### Beispiel 8 erfindungsgemäß (20 Gew.-% Polybutadien-Anteil) (BF290)

### Komponente A

| Anteil [Gew.-%] | Bestandteil | Erhältlich als |
|---|---|---|
| 54,51 | Masterbatch 1 Tabelle 2 | ALPA-MBA 37130 |
| 20,14 | Polysiloxan mit terminalen Vinylgruppen (65.000 mPas), Vinylgehalt: 0,03 mmol/g, Formel (II) | ALPA-VINYLPOLYMER 65 |
| 0,30 | Pt(0)-Karstedt-Katalysator | ALPA-KAT 1 |
| 20,0 | 1,2-Polybutadien | B-3000, Fa. Nippon Soda, Japan |
| 3,79 | modifiziertes TiO₂-Pigment | Iriotec 8850, Merck KGaA |
| 1,26 | TiO₂-Pigment | KRONOS 2300, Kronos Titan GmbH |

545,1 g des Masterbatches 1 der Tabelle 2, 201,4 g Vinyl-Polysiloxan mit terminalen Vinylgruppen (65.000 mPas) der Formel (II) und 200 g 1,2-Polybutadien werden in das Rührgefäß des Planeten-Dissolvers eingewogen und 10 Minuten bei einer Geschwindigkeit von 10 U/min des Planetenantriebs und 1000 U/min des Dissolvers homogenisiert. Danach werden 37,9 g modifiziertes TiO₂-Pigment Iriotec 8850 und 12,6 g TiO₂-Pigment KRONOS 2300 als mechanisch verstärkende Komponenten bei der gleichen Drehgeschwindigkeit eingearbeitet. Sobald die Masse homogen ist (ca. 60 Minuten), werden 3,0 g des Pt(0)-Karstedt-Katalysators zugegeben und die ganze Masse zwei Stunden unter Vakuum von 100 mbar homogenisiert. Die Temperatur muss unter 30 °C gehalten werden.

### Komponente B

| Anteil [Gew.-%] | Bestandteil | Erhältlich als |
|---|---|---|
| 49,68 | Masterbatch 1 Tabelle 2 | ALPA-MBA 37130 |
| 7,65 | Polysiloxan mit terminalen Vinylgruppen (65.000 mPas), Vinylgehalt: 0,03 mmol/g, Formel (II) | ALPA-VINYLPOLYMER 65 |
| 10,92 | Polysiloxan der Formel (III) (200 mPas), H-Gehalt 2,4 mmol/g | HANSA SFA 11230 |
| 11,72 | Polysiloxan der Formel (I) (500 mPas), H-Gehalt 0,163 mmol/g | H-Si 150/2 |
| 0,03 | 1-Ethinyl-1-cyclohexanol | ALPA Retard A |
| 20,0 | 1,2-Polybutadien | B-3000, Nippon Soda, Japan |

496,8 g des Masterbatches 1 der Tabelle 2 und 76,5 g Vinyl-Polysiloxan mit terminalen Vinylgruppen (65.000 mPas) der Formel (II) werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 109,2 g Polysiloxan vom Typ HANSA SFA 11230 als Vernetzer, 117,2 g Polysiloxan vom Typ H-Si 150/2 als Kettenverlängerer vom Typ bei der gleichen Geschwindigkeit eingearbeitet. Sobald die Masse homogen ist (nach ca. 60 Minuten), werden 200 g 1,2-Polybutadien und 0,3 g Verzögerer ALPA Retard A zugegeben und die ganze Masse bei einem Vakuum von 100 mbar für zwei Stunden homogenisiert. Die Temperatur muss unter 30 °C gehalten werden.

Die Komponenten A und B werden im Gewichtsverhältnis 1 : 1 miteinander vermischt und die Polymerbestandteile einer Additionsvernetzung unterzogen wie weiter unten beschrieben.

### Beispiel 8A erfindungsgemäß (BF 290Y)

Die Rezeptur entspricht insgesamt dem Beispiel 8 mit der Ausnahme, dass in den Komponenten A und B anstelle des 1,2 Polybutadiens B-3000 das hydrierte Polybutadien BI-3015 mit 20,0 Gew.-% enthalten ist. Die Herstellung des Hybridelastomers erfolgt wie in Beispiel 8 (BF 290).

### Beispiel 9 erfindungsgemäß (40 Gew.-% Polybutadienanteil) (BF 307)

### Komponente A

| Anteil [Gew.-%] | Bestandteil | Erhältlich als |
|---|---|---|
| 40,35 | Masterbatch 3 Tabelle 3A | ALPA-MBA 37121 |
| 14,92 | Polysiloxan mit terminalen Vinylgruppen (65.000 mPas), Vinylgehalt: 0,03 mmol/g, Formel (II) | ALPA-VINYLPOLYMER 65 |
| 0,30 | Pt(0)-Karstedt-Katalysator | ALPA-KAT 1 |
| 40,0 | 1,2-Polybutadien | BI-3015, Fa. Nippon Soda, Japan |
| 3,32 | modifiziertes TiO₂-Pigment | Iriotec 8850, Merck KGaA |
| 1,11 | TiO₂-Pigment | KRONOS 2300, Kronos Titan GmbH |

403,5 g des Masterbatches 3 der Tabelle 3A, 149,2 g Vinyl-Polysiloxan mit terminalen Vinylgruppen (65.000 mPas) der Formel (II) und 400 g 1,2-Polybutadien werden in das Rührgefäß des Planeten-Dissolvers eingewogen und 10 Minuten bei einer Geschwindigkeit von 10 U/min des Planetenantriebs und 1000 U/min des Dissolvers homogenisiert. Danach werden 33,2 g modifiziertes TiO₂-Pigment Iriotec 8850 und 11,1 g TiO₂-Pigment KRONOS 2300 als mechanisch verstärkende Komponenten bei der gleichen Drehgeschwindigkeit eingearbeitet. Sobald die Masse homogen ist (ca. 60 Minuten), werden 3,0 g des Pt(0)-Karstedt-Katalysators zugegeben und die ganze Masse zwei Stunden unter Vakuum von 100 mbar homogenisiert. Die Temperatur muss unter 30 °C gehalten werden.

### Komponente B

| Anteil [Gew.-%] | Bestandteil | Erhältlich als |
|---|---|---|
| 65,77 | Masterbatch 1 Tabelle 2 | ALPA-MBA 37130 |
| 10,11 | Polysiloxan mit terminalen Vinylgruppen (65.000 mPas), Vinylgehalt: 0,03 mmol/g, Formel (II) | ALPA-VINYLPOLYMER U65 |
| 16,87 | Polysiloxan der Formel (III) (200 mPas), H-Gehalt 2,4 mmol/g (Vernetzungsmittel I) | HANSA SFA 11230 |
| 5,00 | Polysiloxan der Formel (III) (4000 mPas), H-Gehalt 0,31 mmol/g (Vernetzungsmittel II) | HANSA SFA 11340 |
| 2,23 | Polysiloxan der Formel (I) (500 mPas), H-Gehalt 0,163 mmol/g (Kettenverlängerer) | HANSA SFA 12010 |
| 0,02 | 1-Ethinyl-1-cyclohexanol | ALPA Retard A |

657,7 g des Masterbatches 1 der Tabelle 2 und 101,1 g Vinyl-Polysiloxan mit terminalen Vinylgruppen (65.000 mPas) der Formel (II) werden in das Rührgefäß des Planeten-Dissolvers eingewogen und 10 Minuten bei einer Geschwindigkeit von 10 U/min des Planetenantriebs und 1.000 U/min des Dissolvers homogenisiert. Danach werden 168,7 g Polysiloxan vom Typ HANSA SFA 11230 als Vernetzungsmittel I, 50,0 g Polysiloxan der Formel (III) (4000 mPas) vom Typ HANSA SFA 11340 als Vernetzungsmittel II, 22,3 g Polysiloxan vom Typ HANSA SFA 11340 als Kettenverlängerer vom Typ HANSA SFA 12010 bei der gleichen Geschwindigkeit eingearbeitet. Sobald die Masse homogen ist (nach ca. 60 Minuten), werden 0,2 g Verzögerer ALPA Retard A zugegeben und die ganze Masse bei einem Vakuum von 100 mbar für zwei Stunden homogenisiert. Die Temperatur muss unter 30 °C gehalten werden.

Die Komponenten A und B werden zunächst im Gewichtsverhältnis 1 : 1 miteinander vermischt und danach ein weiterer Anteil an 1,2-Polybutadien vom Typ BI-3015 zugegeben, so dass in der Mischung der Gehalt an 1,2-Polybutadien einen Wert von 40,0 Gew.-% erreicht. Die Polymerbestandteile werden danach einer Additionsvernetzung unterzogen wie weiter unten beschrieben.

Trotz des hohen 1,2-Polybutadien-Anteils wird eine optimierte schnelle Reaktionskinetik beobachtet.

### Eigenschaften von erfindungsgemäßen Hybridelastomermaterialien im Vergleich zu herkömmlichen LSR- und EPDM-Elastomeren

Im Folgenden werden verschiedene Eigenschaften von erfindungsgemäßen Hybridelastomermaterialien untersucht und mit den entsprechenden Eigenschaften von herkömmlichen LSR- und EPDM-Elastomeren verglichen. Die Ergebnisse werden im Folgenden im Einzelnen beschrieben und zum Teil in den Figuren dargestellt. Es zeigen dabei im Einzelnen:
- Figur 1: den Verlauf einer statischen Langzeit-Dichtkraft von herkömmlichen Elastomerwerkstoffen und erfindungsgemäßen Hybridelastomermaterialien nach oxidativer Heißluftalterung unter dem Einfluss des Anteils von Polyolefin-Schutzgruppen;
- Figuren 2A bis 2C: Depolymerisationseffekte an herkömmlichen Elastomerwerkstoffen und erfindungsgemäßen Hybridelastomermaterialien nach Einlagerung in Sulfonsäure anhand von Elektronenmikroskopaufnahmen;
- Figur 3A bis 3C: Depolymerisationseffekte an herkömmlichen Elastomerwerkstoffen und erfindungsgemäßen Hybridelastomermaterialien nach Einlagerung in eine FKM-Ionomer-Dispersion anhand von Elektronenmikroskopaufnahmen;
- Figur 4: schematisch den Einfluss des 1,2-Polybutadiengehalt von Polymerwerkstoffen auf den Wasserstoffpermeationskoeffizienten P; und
- Figuren 5A bis 5D: Elektronenmikroskopaufnahmen eines herkömmlichen Elastomerwerkstoffs und verschiedener erfindungsgemäßer Hybridelastomerwerkstoffe und nach Einlagerung in einer FKM-Ionomer-Dispersion.

### Allgemeine Versuchsdurchführung zu Bestimmung der Eigenschaften von herkömmlichen Elastomeren und erfindungsgemäßen Hybridelastomermaterialien

Um die anwendungstechnischen Eigenschaften der aus den Beispielen 1 bis 9 erhältlichen Elastomeren zu prüfen, werden unter Verwendung der jeweiligen Komponenten A und B vernetzte Platten als Prüfkörper gefertigt, wie im Folgenden beschrieben.

Hierzu werden jeweils die beiden Komponenten A und B im Verhältnis 1 : 1 in einem Vakuum-Speedmixer (U. Hauschild) unter Vakuum (ca. 100 mbar) bei Raumtemperatur während einer Mischzeit von ca. 2 Minuten zusammengeführt und danach in die Formen für die Herstellung von Platten (2 mm Dicke) gegossen und vulkanisiert (1h/150 °C).

Die chemische Vernetzungsreaktion bei der Herstellung der erfindungsgemäßen Hybridelastomermaterialien startet unmittelbar nach dem Zusammenmischen der Komponenten A und B, sowie der Temperatureinwirkung (20 °C bis 200 °C). Beide Komponenten A und B sind jeweils zur besseren Mischbarkeit auf ein ähnliches Viskositätsniveau eingestellt.

Aus diesen Platten werden den jeweiligen Normen entsprechende Prüfkörper hergestellt zur Ermittlung von:
DIN 53505 - Shore A Härte
DIN 53504S2 - Zugprüfung - Reißfestigkeit und Reißdehnung
DIN ISO 34-1, Method B, Test (a) + (b) Weiterreißwiderstand
ISO 188, DIN ISO 1817 Chemische Beständigkeit
Rheologischen Eigenschaften (Vulkameterprüfung), 150 °C bis 180 °C, 3 min.
ISO 815 - Druckverformungsrest-Prüfung (DVR)

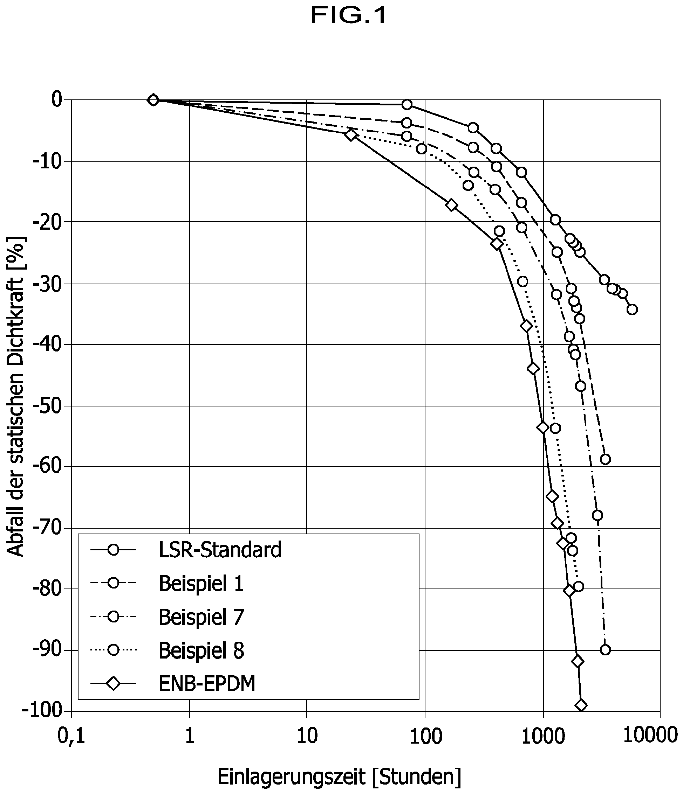

Die Ergebnisse sind in der folgenden Tabellen 5 bis 12 zusammengefasst und partiell in den Figuren 1 bis 5 dargestellt.

### Einfluss des Polyolefin-Anteils auf die Kinetik der Vernetzungsreaktion und auf die mechanischen Eigenschaften der erfindungsgemäßen Hybridelastomermaterialien

Ausgehend vom Beispiel 1 (BF109) wurde der Einfluss verschiedener Konzentrationen von 1,2-Polybutadien in der Gesamtrezeptur auf die Kinetik der chemischen Vernetzungsreaktion und die danach erhaltenen mechanischen Ausgangswerte geprüft. Ferner wird das viskoelastische Verhalten der erhaltenen Proben in der Druckverformungsrest(DVR)-Prüfung beschrieben. Das Material der Probe 4 entspricht dem Beispiel 1 (BF109). Die Materialien der Proben 1 und 2 entsprechen den Beispielen 8 bzw. 7. Die Materialien der Proben 3 und 5 entsprechen den Beispielen 6 bzw. 5.

Der in Tabelle 5 spezifizierte t10-Wert entspricht der Zeit, bei der bei 180 °C ein relativer Vernetzungsumsatz von 10% erfolgt, der t90-Wert steht für die Zeit, in der ein relativer Vernetzungsumsatz von 90% erzielt wird. Entsprechendes gilt für die t50- und t80-Werte. Die Werte werden mit Hilfe von sogenannten Vernetzungsisothermen bestimmt. Diese werden an einem Vulkameter gemessen, in dem das Drehmoment über die Messzeit den Anstieg der inneren Vernetzungsdichte im Elastomerwerkstoff verdeutlicht. Eine untere beheizte Kammerhälfte schwingt oszillatorisch um einen Auslenkungswinkel, wobei eine obere beheizte starre Kammerhälfte das dafür notwendige Drehmoment detektiert. Gerätehersteller: GÖTTFERT Werkstoff-Prüfmaschinen GmbH, MonTech Werkstoffprüfmaschinen GmbH.

Das Minimum beschreibt den unvernetzten Zustand, während das Maximum dem vollständig vernetzten Zustand entspricht. Die Differenz zwischen Minimum und Maximum stellt die relative Vernetzungsdichte dar.

Ein Reaktionsverzögerer wird im Gegensatz zu einem reinen LSR-Material bei den erfindungsgemäßen Hybridwerkstoffsystemen nicht zwingend benötigt, und beträgt daher häufig 0 ppm, so dass sich die Reaktionskinetik erhöhen lässt.

Die aus der Zugprüfung nach DIN 53504 S2 erhaltenen Spannungsmodule beschreiben die statische Steifigkeit des vernetzten erfindungsgemäßen Hybridelastomermaterials und entsprechen dem E-Modul.

Die Charakterisierung der verschiedenen Proben und die bei den Tests erhaltenen Daten sind in Tabelle 5 zusammengefasst.

**Tabelle 5**

| Bestandteile | Probe | 1 | 2 | 3 | 4 | 5 |
|---|---|---|---|---|---|---|
| ALPA 130201 | [Gew.-%] | 100 | 100 | 100 | 100 | 100 |
| 1,2-Polybutadien | [Gew.-%] | 20 | 10 | 5 | 2 | 1 |
| Crosslinker | [Gew.-%] | 9 | 9 | 9 | 9 | 9 |
| Pt(0)-Katalysator | [ppm] | 28 | 28 | 28 | 28 | 28 |

| Vernetzungscharakteristik bei 180 °C | | | | | | |
|---|---|---|---|---|---|---|
| Minimum | [Nm] | 0,00 | 0,00 | 0,01 | 0,04 | 0,09 |
| Maximum | [Nm] | 0,91 | 1,36 | 1,86 | 2,33 | 2,17 |
| t10 | [min] | 0,15 | 0,11 | 0,09 | 0,07 | 0,05 |
| t50 | [min] | 0,37 | 0,30 | 0,25 | 0,16 | 0,11 |
| t80 | [min] | 1,18 | 1,09 | 1,00 | 0,37 | 0,22 |
| t90 | [min] | 1,53 | 1,45 | 1,35 | 1,09 | 0,40 |

| Ausgangswerte bei 23 °C (chemisch vernetzt) | | | | | | |
|---|---|---|---|---|---|---|
| Härte (DIN53505) | Shore A | 43,0 | 49,8 | 55,4 | 57,8 | 50,0 |

| Zugprüfung (DIN53504 S2) | | | | | | |
|---|---|---|---|---|---|---|
| Spannungsmodul M25% | [MPa] | 0,60 | 0,70 | 0,90 | 0,90 | 0,70 |
| Spannungsmodul M50% | [MPa] | 1,11 | 1,41 | 1,79 | 1,95 | 1,26 |
| Spannungsmodul M100% | [MPa] | 2,20 | 2,90 | 3,60 | 3,90 | 2,50 |
| Spannungsmodul M200% | [MPa] | 3,56 | 4,63 | 5,62 | 6,13 | 4,70 |
| Reißfestigkeit | [MPa] | 4,40 | 5,60 | 6,60 | 7,00 | 6,80 |
| Reißdehnung | [%] | 289 | 286 | 264 | 277 | 316 |

| Druckverformungsrestprüfung (ISO 815) | | | | | | |
|---|---|---|---|---|---|---|
| DVR 24h/150°C/Heißluft/ Kaltausbau | [%] | 38,5 | 30 | 32 | 28 | 34 |

Hybridelastomere werden mit zunehmendem Aufpfropfungsgrad, z.B. mit 1,2-Polybutadien, immer reaktionsträger wie dies aus dem Vergleich der Vernetzungscharakteristiken der verschiedenen Proben in Tabelle 5 ersichtlich ist.

Höhere Katalysator- und Vernetzungsmittel-Konzentrationen können solche Kinetikverluste zu einem gewissen Teil kompensieren, die mit zunehmendem Aufpfropfungsgrad an 1,2-Polybutadien entstehen.

### Technische Eigenschaften erfindungsgemäßer Hybridelastomermaterialien

Zu geringe oder zu hohe Konzentrationen von Abschirmgruppen in den erfindungsgemäßen Hybridelastomeren sind wie schon erwähnt qualitativ nicht förderlich. Aufgepfropfte Abschirmgruppen sollen Spaltungs- und Rückreaktionen in wässrigen Medien behindern.

Ein zunehmender Pfropfungsgrad an 1,2-Polybutadieneinheiten, d.h. größer ca. 2 Gew.-% bei Molmassen von 3000 g/mol führt jedoch zu einem immer signifikanteren Abfall der Reißfestigkeit gegenüber den reinen, additionsvernetzbaren Standard-LSR-Materialien (Grundgerüst), wie aus Tabelle 7 bei gleicher Konzentration der Vernetzungschemikalien ersichtlich.

Darüber hinaus wird das statische Langzeit-Dichtkraftverhalten mit einem zunehmenden Anteil an 1,2-Polybutadien, speziell nach aerober und anaerober Heißluftalterung, signifikant verschlechtert. Dieser Einfluss beschränkt den Einsatz der erfindungsgemäßen Hybridelastomere auf Temperaturen unter 120°C.

Figur 1 zeigt das Langzeit-Dichtkraftverhalten verschiedener herkömmlicher Elastomermaterialien und erfindungsgemäßer Hybridelastomermaterialien nach oxidativer Heißluftalterung bei 120 °C, wobei der Abfall der statischen Dichtkraft in % gegen die Einlagerungszeit in Stunden aufgetragen ist. Als Vergleich zu den erfindungsgemäßen Hybridelastomermaterial basierend auf den Rezepturen von Beispiel 1 (BF109) (2 Gew.-% 1,2-PB B-3000), Beispiel 7 (10 Gew.-% 1,2-PB B-3000) und Beispiel 8 (20 Gew.-% 1,2-PB B-3000) dienen zum einen ein LSR-Standard-Material von Beispiel 4 (ALPA 130201;) ohne organische Schutzgruppen und andererseits das mit ENB-EPDM bezeichnete Keltan 2650 Polyolefinmaterial (ARLANXEO Netherlands B.V.). Die Dichtkraftprüfung erfolgte nach der DIN EN ISO 1183-1, Procedure A.

Figur 1 zeigt den Einfluss eines zunehmenden Anteils an Polyolefingruppen in dem erfindungsgemäßen Hybridelastomermaterial auf den Verlauf der statischen Dichtkraft im Langzeittest nach einer oxidativen Heißluftalterung bei 120°C unter Verwendung von Proben der erfindungsgemäßen Beispiele 1, 7 und 8, sowie herkömmlicher LSR- und EPDM-Materialien, Beispiel 4 (LSR-Standard ALPA 130201) bzw. Keltan 2650 (ARLANXEO Netherlands B.V.).

Ein zu hoher Restanteil noch vorhandener, in der Additionsvernetzung nicht verbrauchter reaktiver SiH-Gruppen oder Vinylgruppen im erfindungsgemäßen Hybridelastomeren beeinflusst das chemische Alterungsverhalten bzw. die chemische Langzeit-Beständigkeit negativ. Das wirkt sich durch vermehrte Spaltungs- bzw. Rückreaktionen am Siloxan-Netzwerk aus.

Von entscheidender Bedeutung ist die chemische Beständigkeit der modifizierten Hybridelastomere gegenüber dem sogenannten Lochfraß, womit die Alterungsbeständigkeit gegenüber Polymerdegradation und Spaltungsreaktionen durch aggressive Säuren und mit zunehmender Säurekonzentrationen gemeint ist.

Ein wichtiges Beispiel ist die Sulfonsäure, die bei PEM-FC-Brennstoffzellen durch Spaltungsreaktionen von Sulfongruppen auf der Membran entstehen kann und dann in wässrig verdünnter Form vorliegt. Sulfonsäure wird durch ihre besonderen Eigenschaften als Equilibrierungskatalysator bei der Synthese von LSR-Polymeren verwendet und bewirkt dort Ring-Öffnungsreaktionen.

Alkylbenzolsulfonsäure ist ein geeignetes Testmedium, mit welchem sich das Schadensbild des Polymer-Lochfraßes bzw. eine sogenannte Verkieselung am Standard-LSR-Werkstoff sehr gut nachstellen lässt, auch wenn diese Strukturen typischerweise in der Brennstoffzelle nicht entstehen.

Der Kontakt des Standard-LSR-Materials mit geringsten Konzentrationen von wässrig verdünnter Alkylbenzolsulfonsäure führt schon in kürzesten Kontaktzeiträumen von 72 h und 144 h zu einer ausgeprägten Polymerdegradation, wie dies aus Tabelle 5 für Einlagerungstemperaturen von 75°C ersichtlich ist.

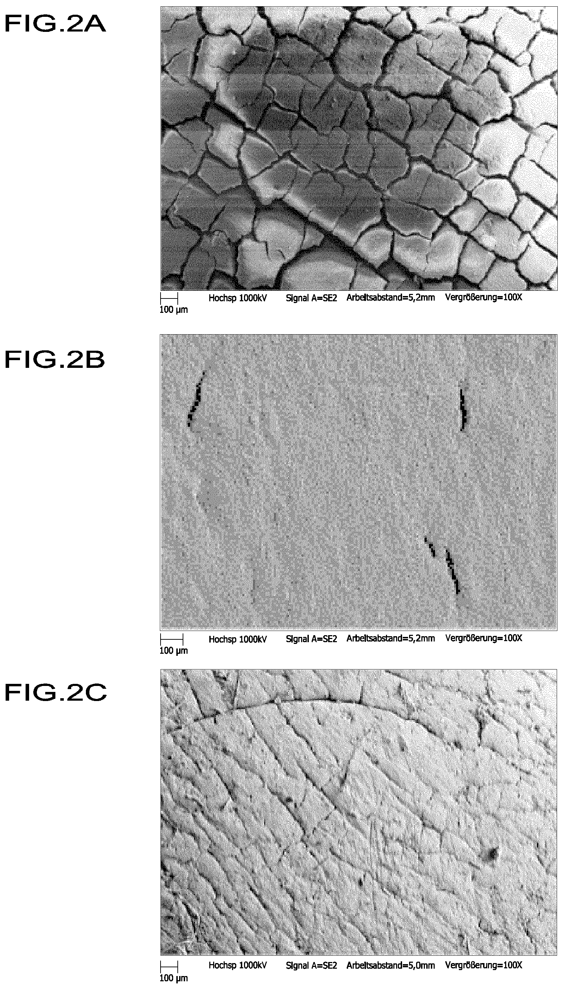

Die Elektronenmikroskop-Aufnahmen der Figuren 2A bis 2C veranschaulichen anhand der Schadensbilder die Unterschiede in der chemischen Beständigkeit zwischen einem Standard-LSR-Material und den erfindungsgemäßen Hybridelastomermaterialien der erfindungsgemäßen Beispiele 1 und 2 (BF109 und BF131) zusätzlich zu den in Tabelle 6 zusammengefassten Testresultaten.

**Tabelle 6: Einlagerung in Alkylbenzolsulfonsäure (Säuregruppenkonzentration 0,091 mol/l) bei 75°C**

| Testparameter / Probe | Referenz-Beispiel 4 (LSR-Standard ALPA 130201) | | | Beispiel 1 BF109 | | | Beispiel 2 BF131 | | |
|---|---|---|---|---|---|---|---|---|---|
| | Basis | | | Basis | | | Basis | | |
| Einlagerungstemperatur [°C] | | 75 | 75 | | 75 | 75 | | 75 | 75 |
| Einlagerungsdauer [h] | | 72 | 144 | | 72 | 144 | | 72 | 144 |
| pH-Wert | | 2 | 2 | | 2 | 2 | | 2 | 2 |
| Härte [Shore A] | 41,3 | 39,3 | 35,3 | 58,8 | 55,8 | 54,8 | 53,0 | 53,8 | 54,6 |
| Änderung der Härte [Shore A] | | -2,0 | -6,0 | | -3,0 | -4,0 | | +0,8 | +1,6 |
| Reißfestigkeit [MPa] | 4,90 | 2,20 | 1,32 | 6,50 | 4,40 | 3,59 | 5,90 | 3,39 | 2,25 |
| Änderung der Reißfestigkeit [%] | | -55,1 | -73,1 | | -32,3 | -54,8 | | -42,5 | -61,9 |
| Reißdehnung [%] | 296 | 162,5 | 79,6 | 194 | | | 263 | 185,2 | 135,4 |
| Änderung der Reißdehnung [%] | | -35,6 | -62,3 | | +1,4 | -23,8 | | -29,6 | -48,5 |
| Volumenänderung [%] | | +0,25 | +3,5 | | +0,8 | +1,2 | | +0,4 | +2,4 |
| Elektronenmikroskopaufnahme | | | Figur 2A | | | Figur 2B | | | Figur 2C |

Die in der Tabelle angegebenen Basis-Werte entsprechen den an den noch nicht eingelagerten Proben gemessenen Werten.

**Tabelle 7: Einlagerung in wässrig-verdünnte FKM-Ionomer-Dispersion 3M980EW (Säuregruppenkonzentration: 0,091 mol/l)**

| Testparameter / Probe | Referenz-Beispiel 4 (LSR-Standard ALPA 130201 | | | Beispiel 1 BF109 | | | Beispiel 2 BF131 | | |
|---|---|---|---|---|---|---|---|---|---|
| | Basis | | | Basis | | | Basis | | |
| Einlagerungstemperatur [°C] | | 75 | 75 | | 75 | 75 | | 75 | 75 |
| Einlagerungsdauer [h] | | 72 | 336 | | 72 | 336 | | 72 | 336 |
| pH-Wert | | 2 | 2 | | 2 | 2 | | 2 | 2 |
| Härte [Shore A] | 41,3 | 42,4 | 44,0 | 58,8 | 58,4 | 58,5 | 53,0 | 53,5 | 54,1 |
| Änderung der Härte [Shore A] | | +1,1 | +2,7 | | -0,4 | -0,3 | | +0,5 | +1,1 |
| Reißfestigkeit [MPa] | 4,90 | 2,01 | 0,93 | 6,50 | 6,00 | 5,70 | 5,90 | 4,00 | 3,60 |
| Änderung der Reißfestigkeit [%] | | -59,0 | -81,1 | | -7,7 | -12,3 | | - 32,2 | -39,0 |
| Reißdehnung [%] | 296 | 154,2 | 95,6 | 194 | 182 | 191 | 263 | 190 | 145 |
| Änderung der Reißdehnung [%] | | -47,9 | -67,7 | | -6,2 | -1,5 | | -27,8 | -44,9 |
| Volumenänderung [%] | | +1,9 | +3,7 | | +0,12 | ± 0 | | +1,3 | +2,5 |
| Gewichtsänderung [%] | DZ | +1,1 | +2,8 | | +0,15 | ± 0 | | +0,7 | +2,0 |
| Elektronenmikroskopaufnahme | | | Figur 3A | | | Figur 3B | | | Figur 3C |

Die in der Tabelle angegebenen Basis-Werte entsprechen den an den noch nicht eingelagerten Proben gemessenen Werten.

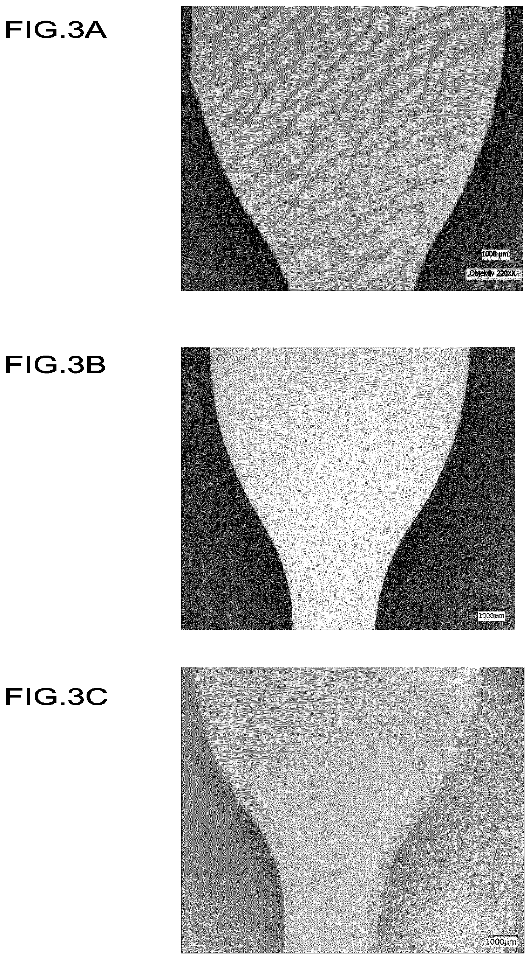

Ein weiterer Test mit FKM-Ionomer-Dispersionen, welche das Ausgangsprodukt für die Beschichtung einer Brennstoffzellenmembran darstellen, wurde an Proben der Beispiele 1 und 2 sowie wiederum mit dem LSR-Referenzmaterial durchgeführt. Die Ergebnisse sind in der Tabelle 7 zusammengefasst und in den Elektronenmikroskopaufnahmen der Figuren 3A bis 3C visualisiert.

Die aus den Dispersionen erzeugten Beschichtungen sind für den Protonentransport bei den elektrochemischen Prozessen in einer Brennstoffzelle notwendig. Die FKM-Ionomer-Dispersionen setzen sich aus Polytetrafluorethylen und Perfluorsulfonylvinylether zusammen, wobei letzterer im wässrigen Medium PFSA(PerFluor-SulfonicAcid)-Strukturen bildet. Diese sind von verschiedenen Herstellern wie u.a. 3M, Dow Chemicals, Du Pont und Solvay erhältlich.

Eingelagert wurden die Proben in dem Produkt 3M980EW (Hersteller 3M) mit einer Säuregruppenkonzentration von 0,091 mol/l, ebenfalls bei 75°C, 72 h und 336 h. Der Vorteil der erfindungsgemäßen Hybridelastomeren gegenüber einem Standard LSR-Material wird in diesem realen Testmedium bezüglich der chemischen Beständigkeit besonders deutlich, da es durch seine hohe Konzentration an PFSA die ungünstigsten, d.h. chemisch aggressivsten Bedingungen erzeugt. Während reiner LSR (Referenz ALPA 130201, Beispiel 4) unter diesen Bedingungen extrem altert (vgl. Figur 3A), zeigen die erfindungsgemäßen Hybridelastomermaterialien, vor allem gemäß Beispiel 1 (BF109) eine exzellente Medienbeständigkeit (Tabelle 7 und Figuren 2A und 2B).

Das erfindungsgemäße Hybridelastomermaterial gemäß Beispiel 1 (BF109), gefolgt von Beispiel 2 (BF131) zeigt in den Prüfmedien (Tabelle 6 und Tabelle 7) deutlich bessere chemische Beständigkeit als herkömmliche LSR-Werkstoffe. Hierin liegt der wesentliche Vorteil der erfindungsgemäßen Hybridelastomere.

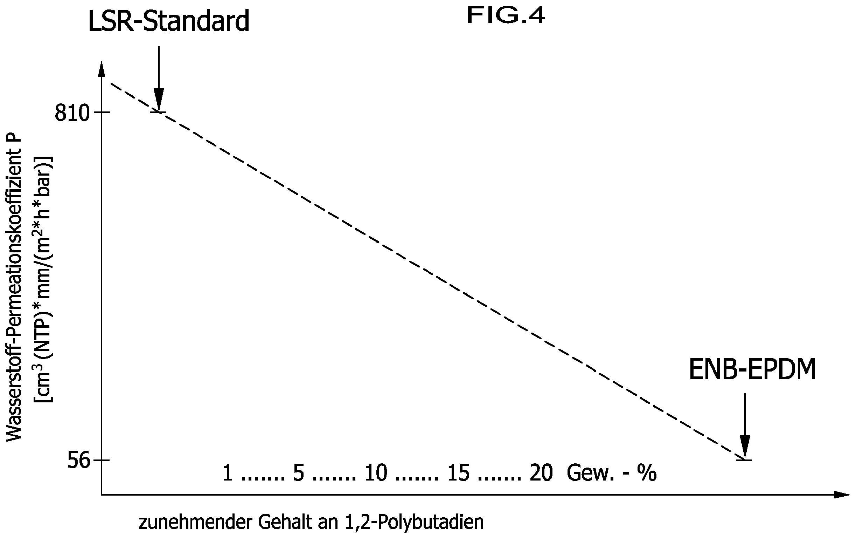

Der Einfluss des Pfropfungsgrades von organischen Abschirmgruppen auf die Gaspermeationsbeständigkeit P ist schließlich schematisch in Figur 4 dargestellt.

Für Standard-LSR erhält man typischerweise einen sogenannten P-Wert für die Wasserstoffpermeation in der Dimension [cm³(NTP)·mm/(m²·h·bar] von 810 P bei 20 °C und 0% relativer Luftfeuchte während EPDM-Materialien (Ethylen-Propylen-Dien-Kautschuk; hier als Äquivalent für 100 Gew.-% 1,2 Polybutadien) typischerweise P-Werte von 56 P zeigen. Die erfindungsgemäßen Hybridelastomere weisen gegenüber dem Standard-LSR deutlich reduzierte P-Werte auf wie dies schematisch, abhängig vom 1,2-Polybutadiengehalt in Figur 4 veranschaulicht ist.

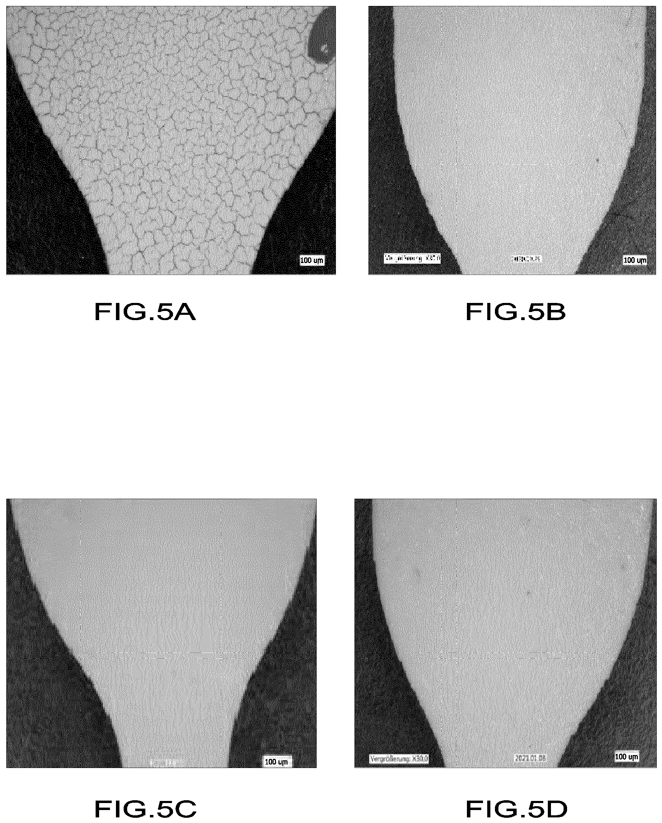

Die Testergebnisse des in Beispiel 9 erhaltenen Hybridelastomermaterials nach einer Einlagerung bei 75 °C während 1000 h in einer wässrigen FKM-Ionomer-Dispersion mit einem Säuregruppenanteil von c= 0,091 mol/l (pH = 1,5 bis 2; erhältlich als 3M980EW von 3M) sind im Vergleich mit weiteren entsprechenden Testwerten der Materialien der Beispiele 1 und 8 sowie einem Material aus dem Stand der Technik (ShinEtsu X34-4269) in Tabelle 8 zusammengefasst. Elektronenmikroskopaufnahmen dieser Werkstoffe nach der Einlagerung sind in den Figuren 5A bis 5D gezeigt.

**Tabelle 8**

| Testparameter / Probe | ShinEtsu X34-4269 | Beispiel 1 BF 109 | Beispiel 8 BF 290 | Beispiel 9 BF307 |
|---|---|---|---|---|
| Härte [Shore A] | 39,39 | 44,1 | 48,1 | 36,0 |
| Härteänderung [Shore A] | -0,7 | -0,1 | +2,7 | -1,2 |
| Reißdehnung [%] | 117 | 390 | 290 | 155 |
| Änderung der Reißdehnung [%] | -54,5 | +14,3 | -3,7 | -8,7 |
| Reißfestigkeit [MPa] | 1,17 | 5,8 | 4,1 | 2,5 |
| Änderung der Reißfestigkeit [%] | -74,0 | +1,8 | -8,5 | -11,5 |
| Volumenänderung [%] | -1,6 | -0,43 | -0,11 | +0,21 |
| Gewichtsänderung [%] nach Rücktrocknung bei 24h/100° C | -13,7 | -0,67 | -0,41 | -0,30 |
| Elektronenmikroskopaufnahme | Figur 5A | Figur 5B | Figur 5C | Figur 5D |

Der bei den Materialien von Beispiel 9 (BF307) ermittelte Druckverformungsrest betrug 23,5 % nach einer Heißluftalterung (24h/150°C/Kaltausbau). Der Verpressungsgrad war 25%.

Die Hybridelastomermaterialien gemäß dem erfindungsgemäßen Beispiel 9 zeigen eine deutlich verbesserte chemische Beständigkeit gegenüber einer wässrig verdünnten FKM-Ionomer-Dispersion verglichen mit dem herkömmlichen Shin-Etsu X34-4269-Material (erhältlich von SHIN-ETSU SILICONES EUROPE B.V.) und auch im Vergleich mit dem in Beispiel 1 erhaltenen erfindungsgemäßen Hybridelastomer BF 109.

Des Weiteren wird bei dem in Beispiel 9 erhaltenen Hybridelastomermaterial auch eine deutlich verbesserte Extraktionsbeständigkeit beobachtet (vgl. Tabelle 12 unten).

In der folgenden Tabelle 9 sind weitere Testergebnisse für erfindungsgemäße Hybridelastomermaterialien der Beispiele 1, 1A, 1B, 1C und 1D zusammengefasst.

**Tabelle 9**

| Testparameter / Probe | Beispiel 1A | Beispiel 1B | Beispiel 1C | Beispiel 1D | Beispiel 1 |
|---|---|---|---|---|---|
| Härte [Shore A] | 55,6 | 53,8 | 57,6 | 57,0 | 53,7 |
| Dichte [g/cm³] | 1,103 | 0,864 | 1,066 | 1,090 | 1,127 |
| Spannungsmodul M25% [MPa] | 1,00 | 1,00 | 0,90 | 1,00 | 0,90 |
| Spannungsmodul M50% [MPa] | 1,77 | 1,72 | 1,73 | 1,92 | 1,63 |
| Spannungsmodul M100% [MPa] | 3,20 | 2,40 | 3,10 | 3,10 | 3,00 |
| Spannungsmodul M200% [MPa] | 4,92 | 3,22 | - | - | 4,78 |
| Reißfestigkeit [MPa] | 5,30 | 3,70 | 4,40 | 4,40 | 6,58 |
| Reißdehnung [%] | 229 | 253 | 189 | 179 | 291 |
| Druckverformungsrest *⁾ [%] | 73 | 82 | 52 | - | 14 |

| | | | | | |
|---|---|---|---|---|---|
| *⁾ Die Werte für den Druckverformungsrest der Tabelle 9 wurden an Proben nach dem Kaltausbau gemessen, die zuvor Heißluft von 150 °C während 24 h bei einem Verpressungsgrad von 25 % ausgesetzt waren. | | | | | |

In der folgenden Tabelle 10 werden erfindungsgemäß erzielbare mechanische Parameter der erfindungsgemäßen Hybridelastomermaterialien mit den Werten eines herkömmlichen LSR-Materials verglichen, welches unter der Handelsbezeichnung ShinEtsu X34-4269 von SHIN-ETSU SILICONES EUROPE B.V. erhältlich ist. Deutliche Unterschiede ergeben sich insbesondere in der chemischen Beständigkeit gegenüber wässrigen FKM-Ionomer-Dispersionen (hier: 3M725EW) mit einem Säuregruppengehalt von c = 0,091 Mol/l. Die Einlagerungszeit wurde für das Vergleichsmaterial deshalb von 1000 h auf 336 h verkürzt.

**Tabelle 10**

| Parameter / Probe | Beispiel 1E | Beispiel 1F | Beispiel 8A | ShinEtsu X34-4269 |
|---|---|---|---|---|
| Einlagerungstemperatur [°C] | 75 | 75 | 75 | 75 |
| Einlagerungsdauer [h] | 1000 | 1000 | 1000 | 336 |
| Säurekonzentration [mol/l] | 0,091 | 0,091 | 0,091 | 0,091 |
| Härteänderung [Shore A] | +6,5 | +0,2 | +0,1 | +2,7 |
| Reißfestigkeit [MPa] nach der Einlagerung | 5,60 | 5,80 | 3,50 | 0,80 |
| Reißfestigkeitsänderung [%] | +1,4 | +1,8 | +2,9 | -85,2 |
| Reißdehnung [%] | 277 | 390 | 138 | 92 |
| Reßdehnungsänderung [%] | -13,9 | +14,3 | +/- 0 | -68,4 |
| Volumenänderung [%] | -0,3 | -0,4 | +3,5 | +4,4 |
| Gewichtsänderung [%] | -0,1 | -0,2 | +3,6 | +4,1 |

In der folgenden Tabelle 11 sind Testergebnisse für erfindungsgemäße Hybridelastomermaterialien der Beispiele 1 (BF 109), 8 (BF 290) und 9 (BF 307) zusammengefasst.

**Tabelle 11**

| Testparameter / Probe | Beispiel 1 BF109 | Beispiel 8 BF290 | Beispiel 9 BF307 |
|---|---|---|---|
| Härte [Shore A] | 44,0 | 45,4 | 37,2 |
| Spannungsmodul M25% [MPa] | 0,90 | 1,00 | 0,90 |
| Spannungsmodul M50% [MPa] | 1,63 | 1,62 | 1,22 |
| Spannungsmodul M100% [MPa] | 3,00 | 3,00 | 1,90 |
| Spannungsmodul M200% [MPa] | 4,78 | - | - |
| Reißfestigkeit [MPa] | 6,58 | 4,50 | 2,90 |
| Reißdehnung [%] | 291 | 160 | 170 |
| Druckverformungsrest [%] *⁾ | 14 | 20 | 27 |

| | | | |
|---|---|---|---|
| *) Die Druckverformungsrestwerte der Tabelle 11 wurden an Proben nach dem Kaltausbau gemessen, die zuvor Heißluft von 150 °C während 24 h bei einem Verpressungsgrad von 25 % ausgesetzt waren. | | | |

Außerdem beobachtet man bei höheren Polybutadien-Gehalten eine bessere Gaspermeationsbeständigkeit, insbesondere bei Polybutadiengehalten von 30 bis 40 Gew.-% an der Gesamtrezeptur.

Eine weitere wichtige Eigenschaft elastomerer Dichtwerkstoffe, insbesondere auch der erfindungsgemäßen Hybridelastomeren, ist deren Extraktionsbeständigkeit, die einem sogenannten Lochfraß oder auch einer sogenannten Verkieselung entgegenwirkt. Gewichtsverlust der Dichtwerkstoffe sind häufig mit dem Ausschwämmen von Partikeln verbunden, die elektrochemisch wirkende Protonen-Exchanger-Membranen in Brennstoffzellen verblocken oder zusetzen können. Dadurch entstehen bei den Brennstoffzellen irreversible Leistungsverluste.

Die Eigenschaft der Extraktionsbeständigkeit lässt sich einfach mit Hilfe des Gewichtsverlusts nach Einlagerung in die oben spezifizierte FKM-Ionomer-Dispersion prüfen. Die Gewichtsverluste von fünf verschiedenen erfindungsgemäßen Hybridelastomeren bei unterschiedlichen Einlagerungszeiten sind in der folgenden Tabelle 12 zusammengefasst Die Gewichtsverlust in Gew.-% werden ermittelt nachdem die zuvor eingelagerten Proben 25 h bei 80 °C rückgetrocknet wurden. Zum Vergleich sind zwei Proben herkömmlicher Materialien, nämlich LSR ShinEtsu X34-4269 (erhältlich von SHIN ETSU SILICONES EUROPE B.V.) und additionsvernetzendes Flüssig-Fluorsilikon DOW Silastic FL30-9201 (erhältlich von Dow Chemicals Company) in der Tabelle mit aufgenommen.

**Tabelle 12**

| | | | | |
|---|---|---|---|---|
| Probe / Einlagerungszeit | 500 h | 1000 h | 1500 h | 2400 h |
| Beispiel 1E (BF 109B) | -0,50 | -0,67 | -1,12 | -1,27 |
| Beispiel 8 (BF290) | -0,38 | -0,41 | -0,40 | -0,52 |
| Beispiel 9 (BF 307) | -0,02 | -0,30 | - | - |
| ShinEtsu X34-4269 | -12,00 | 13,70 | 18,70 | 25,01 |
| DOW Silastic FL30-9201 | -2,32 | -2,36 | -2,41 | -2,55 |

Aus den Daten der Tabelle 12 ist ersichtlich, dass die Extraktionsbeständigkeit mit der Zunahme der Polybutadien-Anteilen verbessert wird und bei 30 Gew.-% Anteil an hydriertem Polybutadien gegen Null tendiert. Dagegen sind die Extraktionswerte bei den beiden herkömmlichen Proben erheblich höher.

Die in der Tabelle 12 angegebenen Extraktionswerte lassen sich auch auf die reine Wasserbeständigkeit und auf die Resistenz gegenüber wässrigen Kühlmitteln übertragen.

## Patentansprüche

1. Hybridelastomermaterial, insbesondere zur Verwendung als Dichtungswerkstoff in Brennstoffzellen, wobei das Hybridelastomermaterial ein Hybridelastomer mit einem Anteil eines Siloxan-Polymermaterials und einem Anteil eines Polyolefin-Elastomermaterials umfasst,
wobei das Siloxan-Polymermaterial ein Siloxan-Polymer der Formel (I) 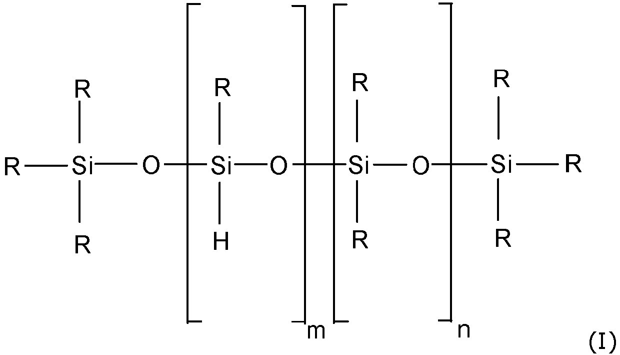
worin die Reste R unabhängig voneinander H, CH₃, Vinyl, Phenyl, (CH₂)ₓCH₃ und/oder C₃H₆O(C₂H₄O)_{y}(C₃H₅O)_{z}R' bedeuten; wobei
m = 1 bis ca. 100,
n = 0 bis 1000,
x = 1 bis 30,
y = 0 bis 20,
z = 0 bis 30,
und wobei die Summe von m + n ≥ 3 ist und R' H, CH₃ oder (CH₂)ₓCH₃ bedeuten;
und ein Siloxan der Formel (II) umfasst 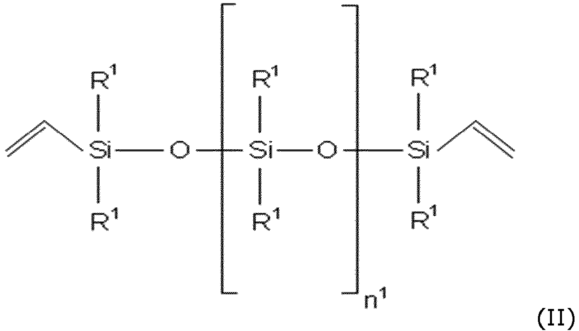 worin die Reste R¹ jeweils unabhängig voneinander CH₃, Vinyl und Phenyl bedeuten und n¹ einen Wert im Bereich von 0 bis 3000 aufweist,
wobei das Polyolefin-Elastomermaterial ausgewählt ist aus 1,2-Polybutadien und 1,4-Polybutadien, wobei die Summe der Anteile des Siloxan-Polymers der Formel (I) und des Siloxans der Formel (II) ca. 50 Gew.-% bis ca. 90 Gew.-% beträgt, und wobei die beiden Materialien miteinander additionsvernetzt sind.

2. Hybridelastomermaterial nach Anspruch 1, wobei das Siloxan-Polymermaterial ein oder mehrere Polysiloxane mit Seiten- und/oder Endgruppen aufweist, welche ausgewählt sind aus H, C₁-C₃₀-Alkyl-Gruppen, C₂-C₃₀-Alkenyl-Gruppen und Aryl-Gruppen,
wobei das Siloxan-Polymermaterial optional ein oder mehrere modifizierte Dimethylsiloxane umfasst, wobei die Methylgruppen partiell durch Wasserstoff unter Bildung von SiH-Gruppen und Vinylgruppen substituiert sind.

3. Hybridelastomermaterial nach einem der Ansprüche 1 oder 2, wobei das Hybridelastomermaterial unter Verwendung eines Siloxan-Vernetzers additionsvernetzt ist,
wobei der Siloxan-Vernetzer insbesondere ausgewählt ist aus Vernetzern der Formel (III) 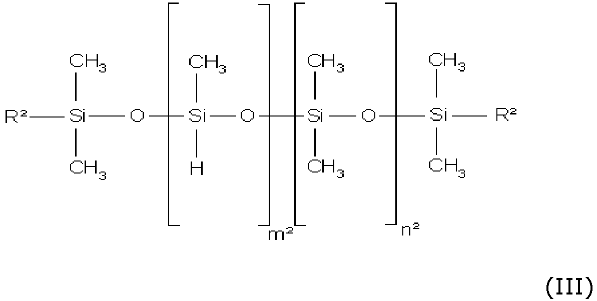
wobei die Reste R² unabhängig voneinander H und CH₃ repräsentieren und wobei der Wert für m² im Bereich von 1 bis ca. 100 und der Wert für n² im Bereich von 0 bis ca. 500 liegt;
wobei vorzugsweise pro Siloxanmolekül drei oder mehr SiH-Gruppen vorhanden sind.

4. Hybridelastomermaterial nach Anspruch 2 oder 3, wobei das Verhältnis der Anteile der SiH-Gruppen zu den Vinylgruppen im Siloxan-Polymeren der Formel (I) sowie in den Siloxanen der Formeln (II) und (III) in der Gesamtheit betrachtet im Bereich von ca. 1 : 0,5 bis ca. 1 : 4,5 liegt, insbesondere im Bereich von ca. 1 : 1,5 bis ca. 1 : 2,5.

5. Hybridelastomermaterial nach einem der Ansprüche 1 bis 4, wobei das Polyolefin-Elastomermaterial funktionelle Gruppen als Abschirmgruppen aufweist, welche ausgewählt sind aus linearen und verzweigten C₂-C₈-Alkyl- und -Alkenylgruppen, wobei das Polyolefin-Elastomermaterial insbesondere einen Anteil an Abschirmgruppen von ca. 40 Gew.-% bis ca. 92 Gew.-% aufweist, wobei die Abschirmgruppen insbesondere ausgewählt sind aus Vinyl, Alkyl, 2,3-Butylen und Mischungen hiervon.

6. Hybridelastomermaterial nach einem der Ansprüche 1 bis 5, wobei der Anteil der Siloxane an dem Polymeranteil des Hybridelastomermaterials ca. 70 Gew.-% bis ca. 99 Gew.-% beträgt, wobei insbesondere die Summe der Anteile des Siloxan-Polymers der Formel (I) und des Siloxans der Formel (II) ca. 60 Gew.-% bis ca. 70 Gew.-% beträgt.

7. Hybridelastomermaterial nach einem der Ansprüche 1 bis 6, wobei der Anteil des Polyolefin-Elastomermaterials an dem Polymeranteil des Hybridelastomermaterials ca. 1 Gew.-% bis ca. 50 Gew.-%, insbesondere ca. 1 Gew.-% bis ca. 30 Gew.-% beträgt.

8. Hybridelastomermaterial nach einem der Ansprüche 1 bis 7, wobei das Hybridelastomermaterial einen oder mehrere Füllstoffe umfasst, wobei der Anteil der Füllstoffe an dem Hybridelastomermaterial ca. 5 bis ca. 50 Gew.-%, insbesondere ca. 15 bis ca. 30 Gew.-% beträgt, wobei der Füllstoff oder die Füllstoffe insbesondere ausgewählt sind aus Kieselsäure-, Silikonharz- und Titanat-basierenden Füllstoffen.

9. Hybridelastomermaterial nach einem der Ansprüche 1 bis 8, wobei das additionsvernetzbare Siloxan-Polymermaterial und das Polyolefin-Elastomermaterial katalytisch additionsvernetzt sind.

10. Verfahren zu Herstellung eines Hybridelastomermaterials nach einem der Ansprüche 1 bis 9, umfassend die Schritte
- Bereitstellen einer Reaktionsmischung umfassend einen Anteil eines Siloxan-Polymermaterials und einen Anteil eines Polyolefin-Elastomermaterials; und
- Additionsvernetzung der beiden Materialien.

11. Verfahren nach Anspruch 10, wobei die Reaktionsmischung aus einer Komponente A und einer Komponente B hergestellt wird, wobei die Komponente A einen Anteil eines ersten Polysiloxanmaterials, einen Anteil eines Polyolefin-Elastomermaterials und einen Katalysator für die Additionsvernetzung umfasst und wobei die Komponente B einen Anteil des ersten Polysiloxanmaterials und einen Anteil eines zweiten, vom ersten Polysiloxanmaterial verschiedenen Siloxanmaterials umfasst, wobei das erste Polysiloxanmaterial ein Vinylpolysiloxan mit terminalen Vinylgruppen umfasst und das zweite Siloxanmaterial ein Siloxan mit seiten- und/ oder endständigen SiH-Gruppen umfasst.

12. Verfahren nach Anspruch 10 oder 11, wobei die Reaktionsmischung einen Füllstoff, insbesondere in Form eines hydrophobierten und/oder hydrophilen mineralischen Füllstoffs umfasst,
wobei der Füllstoff insbesondere in einem Masterbatch bereitgestellt wird und das Masterbatch der Reaktionsmischung zugegeben wird, vorzugsweise als Bestandteil der Komponente A und/oder der Komponente B.

13. Verfahren nach Anspruch 11 oder12, wobei die Komponente B einen Anteil eines Verzögerers umfasst.

14. Polymerelektrolytbrennstoffzellen-Stack mit einer Mehrzahl an Brennstoffzellen, wobei der Stack Dichtungselemente umfasst, welche unter Verwendung eines Hybridelastomermaterials nach einem der Ansprüche 1 bis 9 hergestellt sind.

15. Verwendung eines Hybridelastomermaterials gemäß einem der Ansprüche 1 bis 9 in einem Siebdruckverfahren, insbesondere zum Auftragen des Hybridelastomers als Dichtungsmasse auf ein Substrat.

16. Verwendung nach Anspruch 15, wobei das Hybridelastomermaterial in einer Schichtdicke von ca. 10 µm bis ca. 500 µm, insbesondere von ca. 10 µm bis ca. 100 µm auf das Substrat aufgetragen wird.

17. Verwendung nach Anspruch15 oder 16, wobei das Hybridelastomermaterial einen eine geschlossen-zellige, Porenstruktur bildenden Füllstoff umfasst, deren Gehalt insbesondere ca. 0,5 Gew.-% bis ca. 4 Gew.-% beträgt, bezogen auf das Gesamtgewicht des Hybridelastomermaterials.

## Claims

1. Hybrid elastomeric material, in particular for use as a sealing material in fuel cells, wherein the hybrid elastomeric material comprises a hybrid elastomer with a proportion of a siloxane polymeric material and a proportion of a polyolefin elastomeric material,
wherein the siloxane polymeric material comprises a siloxane polymer of formula (I) 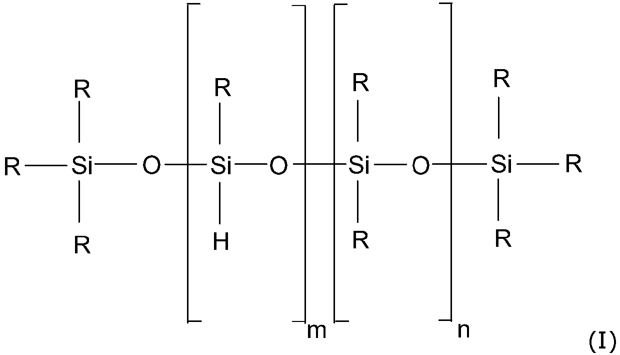
wherein the radicals R independent of one another mean H, CH₃, vinyl, phenyl, (CH₂)ₓCH₃, and/or C₃H₆O(C₂H₄O)_{y}(C₃H₅O)_{z}R'; wherein
m = 1 to about 100,
n = 0 to 1000,
x = 1 to 30,
y = 0 to 20,
z = 0 to 30,
and wherein the sum of m + n ≥ 3 and R' mean H, CH₃, or (CH₂)ₓCH₃;
and comprises a siloxane of formula (II) 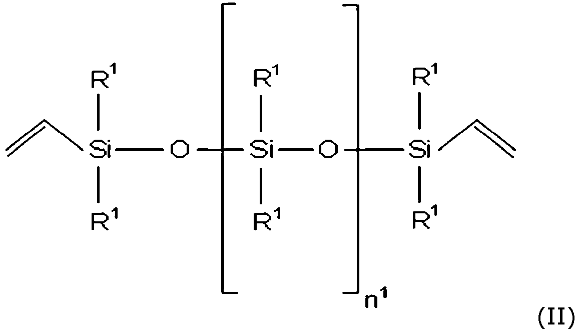
wherein the radicals R¹ independent of one another each mean CH₃, vinyl, and phenyl and n¹ has a value in the range of 0 to 3000,
wherein the polyolefin elastomeric material is selected from 1,2-polybutadiene and 1,4-polybutadiene, wherein the sum of the proportions of the siloxane polymer of formula (I) and the siloxane of formula (II) is about 50% by weight to about 90% by weight, and wherein the two materials are crosslinked with one another by addition.

2. Hybrid elastomeric material in accordance with Claim 1, wherein the siloxane polymeric material has one or more polysiloxanes with pendant groups and/or terminal groups, which are selected from H, C₁-C₃₀ alkyl groups, C₂-C₃₀ alkenyl groups, and aryl groups,
wherein the siloxane polymeric material comprises one or more modified dimethyl siloxanes, wherein the methyl groups are partially substituted by hydrogen with the formation of SiH groups and vinyl groups.

3. Hybrid elastomeric material in accordance with any one of Claims 1 or 2, wherein the hybrid elastomeric material is cross-linked by addition using a siloxane crosslinker,
wherein the siloxane crosslinker is selected from crosslinkers of formula (III) 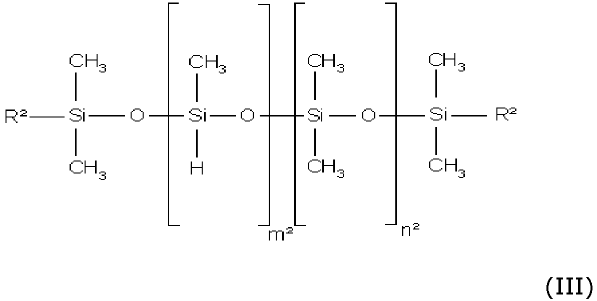
wherein the radicals R² independent of one another represent H and CH₃ and wherein the value for m² is in the range of 1 to about 100 and the value for n² is in the range of 0 to about 500;
wherein preferably three or more SiH groups per siloxane molecule are present.

4. Hybrid elastomeric material in accordance with Claims 2 or 3, wherein the ratio of the proportions of SiH groups to vinyl groups in the siloxane polymer of formula (I) and in the siloxanes of formulas (II) and (III) considered in the totality is in the range of about 1 : 0.5 to about 1 : 4.5, in particular in the range of about 1 : 1.5 to about 1 : 2.5.

5. Hybrid elastomeric material in accordance with any one of Claims 1 to 4, wherein the polyolefin elastomeric material has functional groups as shielding groups, which are selected from linear and branched C₂-C₈ alkyl and alkenyl groups, in particular wherein the polyolefin elastomeric material has a proportion of shielding groups of about 40% by weight to about 92% by weight, wherein the shielding groups are selected, in particular, from vinyl, alkyl, 2,3-butylene, and mixtures thereof.

6. Hybrid elastomeric material in accordance with any one of Claims 1 to 5, wherein the proportion of siloxanes in the polymer portion of the hybrid elastomeric material is about 70% by weight to about 99% by weight, in particular wherein the sum of the proportions of the siloxane polymer of formula (I) and the siloxane of formula (II) is about 60% by weight to about 70% by weight.

7. Hybrid elastomeric material in accordance with any one of Claims 1 to 6, wherein the proportion of the polyolefin elastomeric material in the polymer portion of the hybrid elastomeric material is about 1% by weight to about 50% by weight, in particular about 1% by weight to about 30% by weight.

8. Hybrid elastomeric material in accordance with any one of Claims 1 to 7, wherein the hybrid elastomeric material comprises one or more fillers, wherein the proportion of the fillers in the hybrid elastomeric material is about 5% by weight to about 50% by weight, in particular about 15% by weight to about 30% by weight, in particular wherein the filler or fillers is/are selected from silica-based, silicone resin-based, and titanate-based fillers.

9. Hybrid elastomeric material in accordance with any one of Claims 1 to 8, wherein the siloxane polymeric material that can be crosslinked by addition and the polyolefin elastomeric material are catalytically crosslinked by addition.

10. Method for producing a hybrid elastomeric material in accordance with any one of Claims 1 to 9, comprising the steps
- providing a reaction mixture comprising a proportion of a siloxane polymeric material and a proportion of a polyolefin elastomeric material; and
- crosslinking the two materials by addition.

11. Method in accordance with Claim 10, wherein the reaction mixture is produced from a component A and a component B, wherein the component A comprises a proportion of a first polysiloxane material, a proportion of a polyolefin elastomeric material, and a catalyst for the crosslinking by addition, and wherein the component B comprises a proportion of the first polysiloxane material and a proportion of a second siloxane material that is different from the first polysiloxane material, wherein the first polysiloxane material comprises a vinyl polysiloxane with terminal vinyl groups and the second siloxane material comprises a siloxane with pendant and/or terminal SiH groups.

12. Method in accordance with Claim 10 or 11, wherein the reaction mixture comprises a filler, in particular in the form of a hydrophobized and/or hydrophilic mineral filler,
in particular wherein the filler is provided in a masterbatch and the masterbatch is added to the reaction mixture, preferably as part of the component A and/or the component B.

13. Method in accordance with any one of Claims 11 to 12, wherein the component B comprises a proportion of a retarder.

14. Polymer electrolyte fuel cell stack with a plurality of fuel cells, wherein the stack comprises sealing elements, which are produced using a hybrid elastomeric material in accordance with any one of Claims 1 to 9.

15. Use of a hybrid elastomeric material in accordance with any one of Claims 1 to 9 in a screen printing process, in particular for applying the hybrid elastomer as a sealant to a substrate.

16. Use in accordance with Claim 15, wherein the hybrid elastomeric material is applied to the substrate in a layer thickness of about 10 µm to about 500 µm, in particular about 10 µm to about 100 µm.

17. Use in accordance with Claim 15 or 16, wherein the hybrid elastomeric material comprises a filler forming a closed-cell pore structure, the content of which is, in particular, about 0.5% by weight to about 4% by weight relative to the total weight of the hybrid elastomeric material.

## Revendications

1. Matériau élastomère hybride, en particulier destiné à être utilisé comme matériau d'étanchéité dans des piles à combustible, dans lequel le matériau élastomère hybride comprend un élastomère hybride avec une proportion d'un matériau polymère de siloxane et une proportion d'un matériau élastomère de polyoléfine,
dans lequel le matériau polymère de siloxane comprend un polymère de siloxane de formule (I) 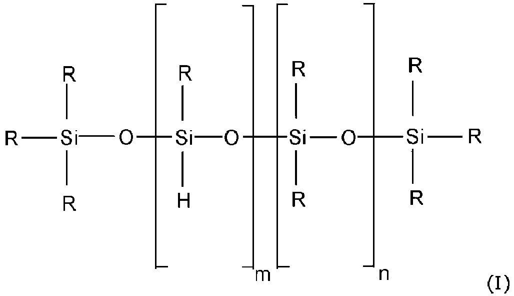
dans laquelle les radicaux R signifient indépendamment les uns des autres H, CH₃, vinyle, phényle, (CH₂)ₓCH3 et/ou C₃H₆O(C₂H₄O)_{y}(C₃H₅O)_{z}R' ; dans lequel
m = 1 à environ 100,
n = 0 à 1000,
x = 1 à 30,
y = 0 à 20,
z = 0 à 30,
et dans lequel la somme de m + n est ≥ 3 et R' signifient H, CH₃ ou (CH₂)ₓCH3 ;
et un siloxane de formule (II) 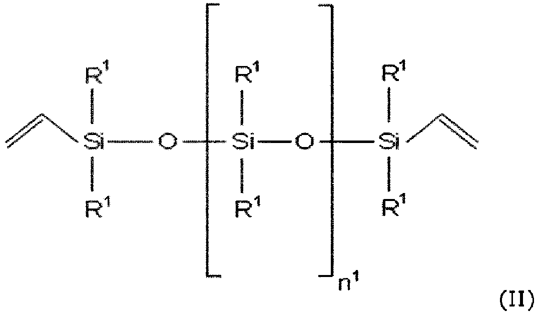
dans lequel les radicaux R¹ signifient respectivement indépendamment les uns des autres CH₃, vinyle et phényle et n¹ présente une valeur dans la plage de 0 à 3000,
dans lequel le matériau élastomère de polyoléfine est sélectionné parmi le 1,2-polybutadiène et le 1,4-polybutadiène, dans lequel la somme des proportions du polymère de siloxane de formule (I) et du siloxane de formule (II) atteint environ 50 % en poids à environ 90 % en poids, et dans lequel les deux matériaux sont réticulés par addition.

2. Matériau élastomère hybride selon la revendication 1, dans lequel le matériau polymère de siloxane présente un ou plusieurs polysiloxanes avec des groupes latéraux et/ou terminaux, lesquels sont sélectionnés parmi H, les groupes C₁-C₃₀ alkyle, les groupes C₂-C₃₀ alcényle et les groupes aryle,
dans lequel le matériau polymère de siloxane comprend facultativement un ou plusieurs diméthylsiloxanes modifiés, dans lequel les groupes méthyle sont partiellement substitués par de l'hydrogène pour former des groupes SiH et des groupes vinyle.

3. Matériau élastomère hybride selon l'une quelconque des revendications 1 ou 2, dans lequel le matériau élastomère hybride est réticulé par addition à l'aide d'un agent de réticulation de siloxane,
dans lequel l'agent de réticulation de siloxane est en particulier sélectionné parmi les agents de réticulation de formule (III) 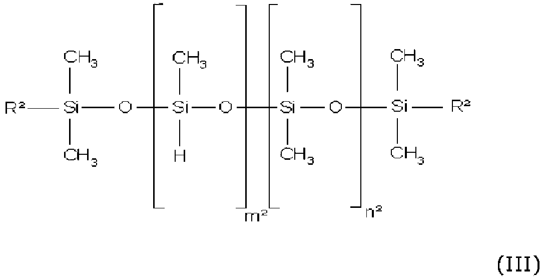
dans lequel les radicaux R² représentent indépendamment les uns des autres H et CH₃ et dans lequel la valeur pour m² se situe dans la plage de 1 à environ 100 et la valeur pour n² dans la plage de 0 à environ 500 ;
dans lequel de préférence trois groupes SiH ou plus sont présents par molécule de siloxane.

4. Matériau élastomère hybride selon la revendication 2 ou 3, dans lequel le rapport des proportions des groupes SiH aux groupes vinyle dans le polymère de siloxane de formule (I) ainsi que dans les siloxanes des formules (II) et (III) considérés dans l'ensemble se situe dans la plage d'environ 1: 0,5 à environ 1: 4,5, en particulier dans la plage d'environ 1: 1,5 à environ 1: 2,5.

5. Matériau élastomère hybride selon l'une quelconque des revendications 1 à 4, dans lequel le matériau élastomère de polyoléfine présente des groupes fonctionnels en tant que groupes protecteurs, qui sont sélectionnés parmi des groupes C₂-C₈ alkyle et alcényle linéaires et ramifiés, dans lequel le matériau élastomère de polyoléfine présente en particulier une proportion de groupes protecteurs d'environ 40 % en poids à environ 92 % en poids, dans lequel les groupes protecteurs sont en particulier sélectionnés parmi le vinyle, l'alkyle, le 2,3-butène et leurs mélanges.

6. Matériau élastomère hybride selon l'une quelconque des revendications 1 à 5, dans lequel la proportion des siloxanes sur la proportion de polymère du matériau élastomère hybride atteint environ 70 % en poids à environ 99 % en poids, dans lequel en particulier la somme des proportions du polymère de siloxane de formule (I) et du siloxane de formule (II) atteint environ 60 % en poids à environ 70 % en poids.

7. Matériau élastomère hybride selon l'une quelconque des revendications 1 à 6, dans lequel la proportion du matériau élastomère de polyoléfine sur la proportion de polymère du matériau élastomère hybride atteint environ 1 % en poids à environ 50 % en poids, en particulier environ 1 % en poids à environ 30 % en poids.

8. Matériau élastomère hybride selon l'une quelconque des revendications 1 à 7, dans lequel le matériau élastomère hybride comprend une ou plusieurs charges, dans lequel la proportion des charges sur le matériau élastomère hybride atteint environ 5 à environ 50 % en poids, en particulier environ 15 à environ 30 % en poids, dans lequel la charge ou les charges sont en particulier sélectionnées parmi les charges à base de silice, de résine de silicone et de titanate.

9. Matériau élastomère hybride selon l'une quelconque des revendications 1 à 8, dans lequel le matériau polymère de siloxane réticulable par addition et le matériau élastomère de polyoléfine sont réticulés par addition catalytique.

10. Procédé de fabrication d'un matériau élastomère hybride selon l'une quelconque des revendications 1 à 9, comprenant les étapes
- de fourniture d'un mélange réactionnel comprenant une proportion d'un matériau polymère de siloxane et une proportion d'un matériau élastomère de polyoléfine ; et
- de réticulation par addition des deux matériaux.

11. Procédé selon la revendication 10, dans lequel le mélange réactionnel est fabriqué à partir d'un composant A et d'un composant B, dans lequel le composant A comprend une proportion d'un premier matériau polysiloxane, une proportion d'un matériau élastomère de polyoléfine et un catalyseur pour la réticulation par addition et dans lequel le composant B comprend une proportion du premier matériau polysiloxane et une proportion d'un second matériau siloxane différent du premier matériau polysiloxane, dans lequel le premier matériau polysiloxane comprend un polysiloxane de vinyle avec des groupes vinyle terminaux et le second matériau siloxane comprend un siloxane avec des groupes SiH latéraux et/ou en fin de chaîne.

12. Procédé selon la revendication 10 ou 11, dans lequel le mélange réactionnel comprend une charge, en particulier sous forme de charge minérale hydrophobe et/ou hydrophile,
dans lequel la charge est en particulier fournie dans un mélange maître et le mélange maître est ajouté au mélange réactionnel, de préférence en tant que constituant du composant A et/ou du composant B.

13. Procédé selon la revendication 11 ou 12, dans lequel le composant B comprend une proportion d'un retardateur.

14. Empilement de piles à combustible à électrolyte polymère avec une pluralité de piles à combustible, dans lequel l'empilement comprend des éléments d'étanchéité qui sont fabriqués à l'aide d'un matériau élastomère hybride selon l'une quelconque des revendications 1 à 9.

15. Utilisation d'un matériau élastomère hybride selon l'une quelconque des revendications 1 à 9 dans un procédé de sérigraphie, en particulier pour appliquer l'élastomère hybride en tant que masse d'étanchéité sur un substrat.

16. Utilisation selon la revendication 15, dans laquelle le matériau élastomère hybride est appliqué sur le substrat dans une épaisseur de couche d'environ 10 µm à environ 500 µm, en particulier d'environ 10 µm à environ 100 µm.

17. Utilisation selon la revendication 15 ou 16, dans laquelle le matériau élastomère hybride comprend une charge formant une structure poreuse à cellules fermées, dont la teneur atteint en particulier environ 0,5 % en poids à environ 4 % en poids, par rapport au poids total du matériau élastomère hybride.
